# EUROPEAN PATENT SPECIFICATION

(11) **EP 4 358 589 B1**
(45) Date of publication and mention of the grant of the patent: **27.05.2026**
(21) Application number: 21952145.7
(22) Date of filing: 31.07.2021
(51) Int. Cl.: H04W 36/18, H04L 69/18, H04W 76/15, H04W 88/06

(54) **ELECTRONIC APPARATUS AND TRANSMISSION CONTROL METHOD**
ELEKTRONISCHE VORRICHTUNG UND ÜBERTRAGUNGSSTEUERUNGSVERFAHREN
APPAREIL ÉLECTRONIQUE ET PROCÉDÉ DE COMMANDE DE TRANSMISSION

(43) Date of publication of application: 24.04.2024
(73) Proprietor: Huawei Technologies Co., Ltd., Longgang Shenzhen, Guangdong 518129 (CN)
(72) Inventor: XIE, Zichen, Shenzhen, Guangdong 518129 (CN); GUO, Zhan, Shenzhen, Guangdong 518129 (CN); LI, Weihua, Shenzhen, Guangdong 518129 (CN); GU, Yanjie, Shenzhen, Guangdong 518129 (CN)
(74) Representative: Körber, Martin Hans
(86) International application number: PCT/CN2021/109947
(87) International publication number: WO 2023/010235

(56) References cited:
- CN-A- 1 799 233
- CN-A- 106 416 418
- CN-A- 106 576 279
- CN-A- 107 517 489
- US-A1- 2015 181 488
- US-A1- 2017 135 014
- US-A1- 2019 132 401
- US-A1- 2020 323 032

## Description

### TECHNICAL FIELD

This application relates to the field of communication technologies, and in particular, to an electronic apparatus, a control circuit, and a transmission control method.

### BACKGROUND

With rapid development of electronic technologies, various electronic apparatuses and applications based on the electronic apparatuses are increasingly rich. Various applications on the electronic apparatus may transmit service data to another electronic apparatus based on an actual service requirement.

After the service data is generated, an application may transmit the service data to another electronic apparatus over a wireless communication protocol preconfigured based on a service type of the service data. When a plurality of wireless communication protocols are supported for communication between the electronic apparatus and the another electronic apparatus, wireless communication resources between the electronic apparatuses are not properly used.

US2019132401A1 discloses an apparatus and method for providing one or more protocols for one or more electronic devices. The method includes establishing, by an electronic device configured to provide a framework interface by executing instructions stored in a memory, one or more physical channels with an external electronic device, using one or more communication modules, executing, by the electronic device, two or more application programs to interface with the framework interface, and communicating, via the framework interface, data from the two or more application programs through the one or more physical channels to the external electronic device, using at least one logical channel or session for a respective one of the two or more application programs.

US2020323032Al discloses an electronic device having a communication processor including a first communication circuitry, a second communication circuitry, and a temperature measurement sensor. The electronic device further includes an application processor that receives information via the second communication circuitry and determines whether to request the communication processor change modes. The communication processor receives a signal to change modes, release an RRC connection, and control the second communication circuitry to enter a sleep state.

### SUMMARY

This application provides an electronic apparatus and a transmission control method, to improve satisfaction of a service requirement.

Embodiments of this application provide an electronic apparatus and a control circuit that support a wireless connectivity adaptive bus architecture (Connectivity Adaptive Bus Architecture, CABA), and a transmission control method that is performed based on an electronic apparatus that supports the CABA or a control circuit that supports the CABA.

According to a first aspect, an electronic apparatus is provided, including: the control circuit and at least two communication circuits, where
the control circuit is configured to: obtain first service data, and selectively distribute the first service data to at least one of the at least two communication circuits, and any one of the at least two communication circuits supports one wireless communication protocol.

The electronic apparatus further includes: an application processor; the application processor is configured to generate the first service data;
the control circuit is a bus; and the application processor and the at least two communication circuits are separately connected to the bus.

The control circuit is specifically configured to screen the at least two communication circuits, and determine that a first communication circuit is a communication circuit configured to transmit the first service data to a second electronic apparatus E2; and is configured to indicate the first communication circuit to transmit the first service data to the second electronic apparatus E2.

In a possible implementation, the at least two communication circuits support different wireless communication protocols.

In a possible implementation, the electronic apparatus includes: at least one communication chip;
each of the at least two communication circuits is a circuit in the at least one communication chip; and
each of the at least one communication chip includes at least one of the at least two communication circuits.

In a possible implementation, the electronic apparatus is a communication chip; and the control circuit and the at least two communication circuits are circuits integrated in the communication chip.

In a possible implementation, the wireless communication protocols supported by the at least two communication circuits include at least two of the following:
a Bluetooth protocol, a Wi-Fi protocol, an ultra wide band UWB protocol, a global navigation satellite system GNSS protocol, a ZigBee Zigbee protocol, a near field communication NFC protocol, a home Internet of Things communication protocol technology Thread protocol, and an infrared protocol.

In a possible implementation, each of the at least two communication circuits includes: a media access control MAC unit corresponding to a wireless communication protocol supported by each communication circuit or a MAC layer processing unit corresponding to a wireless communication protocol supported by each communication circuit.

In a possible implementation, the control circuit is further configured to: obtain second service data, and when the first service data and the second service data meet a combination transmission condition, determine that a second communication circuit is a communication circuit configured to transmit the first service data and the second service data; and indicate the second communication circuit to transmit the first service data and the second service data.

In a possible implementation, the first communication circuit is configured to: after the control circuit indicates the first communication circuit to transmit the first service data, establish, based on a first communication protocol supported by the first communication circuit, a first communication connection used to transmit the first service data; and is configured to release the first communication link when the control circuit indicates the second communication circuit to transmit the first service data and the second service data.

According to a second aspect, a transmission control method is provided, applied to a control circuit in a first electronic apparatus E1. The method includes:
obtaining first service data; and
selectively distributing the first service data to at least one of at least two communication circuits in the first electronic apparatus E1, where
any one of the at least two communication circuits supports one wireless communication protocol,

in which first electronic apparatus E1 further comprises an application processor configured to generate the first service data; the control circuit is a bus; and the application processor and the at least two communication circuits are separately connected to the bus,
wherein the method comprises:
   screening the at least two communication circuits, and determining that a first communication circuit is a communication circuit configured to transmit the first service data to a second electronic apparatus (E2); and
   indicating the first communication circuit to transmit the first service data to the second electronic apparatus (E2).

According to another aspect, this application provides a computer-readable storage medium. The computer-readable storage medium stores instructions, and the instructions may be executed by one or more processors on a processing circuit. When the instructions are run on a computer, the computer is enabled to perform the method according to any one of the foregoing aspects or any possible implementation of the foregoing aspects.

According to still another aspect, a computer program product including instructions is provided. When the computer program product runs on a computer, the computer is enabled to perform the method in any one of the foregoing aspects or any possible implementation of any one of the foregoing aspects.

### BRIEF DESCRIPTION OF DRAWINGS

To describe the technical solutions in this application or in the conventional technology more clearly, the following briefly describes the accompanying drawings for describing the embodiments or the conventional technology. Apparently, the accompanying drawings in the following description show some embodiments of this application, and a person of ordinary skill in the art may still derive other drawings from these accompanying drawings without creative efforts.
FIG. 1 is a schematic diagram of a communication system according to an embodiment of this application;
FIG. 2 is a schematic diagram of an architecture of an electronic apparatus according to an embodiment of this application;
FIG. 3A is a schematic diagram of a CABA architecture according to an embodiment of this application;
FIG. 3B is a schematic diagram of a structure of a communication subsystem according to an embodiment of this application.
FIG. 3C is a schematic diagram of another CABA architecture according to an embodiment of this application;
FIG. 3D is a schematic diagram of a hierarchical structure of an electronic apparatus using the CABA architecture shown in FIG. 3A;
FIG. 3E(1) and FIG. 3E(2) are schematic diagrams of a hierarchical structure of an electronic apparatus using the CABA architecture shown in FIG. 3C;
FIG. 3F is a schematic diagram of distributing positioning data by a CABA control module in the electronic apparatus shown in FIG. 3E(1) and FIG. 3E(2);
FIG. 3G is a schematic diagram of distributing data such as audio by a CABA control module in the electronic apparatus shown in FIG. 3E(1) and FIG. 3E(2);
FIG. 3H is a schematic diagram of distributing file data by a CABA control module in the electronic apparatus shown in FIG. 3E(1) and FIG. 3E(2);
FIG. 3I is a schematic diagram of distributing mixed data by a CABA control module in the electronic apparatus shown in FIG. 3E(1) and FIG. 3E(2);
FIG. 4A to FIG. 4B are a group of schematic diagrams of another communication system according to an embodiment of this application;
FIG. 5A to FIG. 5B are a group of schematic diagrams of a connection manner between a control module and another module according to an embodiment of this application;
FIG. 5C is still another schematic diagram of a connection manner between a control module and another module according to an embodiment of this application;
FIG. 6A is a schematic diagram of a structure of an electronic apparatus according to an embodiment of this application;
FIG. 6B is a schematic diagram 1 of a detailed structure of an electronic apparatus according to an embodiment of this application;
FIG. 6C is a schematic diagram 2 of a detailed structure of an electronic apparatus according to an embodiment of this application;
FIG. 6D is a schematic diagram 3 of a detailed structure of an electronic apparatus according to an embodiment of this application;
FIG. 6E is a schematic diagram 4 of a detailed structure of an electronic apparatus according to an embodiment of this application;
FIG. 7A is a schematic diagram 1 of a processing procedure of a control method according to an embodiment of this application;
FIG. 7B is a schematic flowchart of updating global environment information according to an embodiment of this application;
FIG. 7C is a schematic flowchart of a control method applied to scenario switching according to an embodiment of this application;
FIG. 8A is a schematic diagram of positioning service scenario switching according to an embodiment of this application;
FIG. 8B is a schematic diagram of a data flow of a positioning service according to an embodiment of this application;
FIG. 9 is a schematic flowchart of a control method applied to a combination scenario according to an embodiment of this application;
FIG. 10A is a schematic diagram of a data flow when a mobile phone and a smart watch do not use a combined connection manner;
FIG. 10B is a schematic diagram of a data flow when a mobile phone and a smart watch use a combined connection manner;
FIG. 11A is a schematic diagram of a whole-house roaming scenario of a wearable device according to an embodiment of this application;
FIG. 11B is a schematic diagram of a CABA-based Bluetooth whole-house roaming data flow;
FIG. 12A and FIG. 12B are schematic flowcharts 1 of a control method applied to a relay scenario according to an embodiment of this application;
FIG. 13 is a schematic diagram of a forwarding path of a data flow in a relay device according to an embodiment of this application;
FIG. 14A and FIG. 14B are schematic flowcharts 2 of a control method applied to a relay scenario according to an embodiment of this application;
FIG. 15 is a schematic block diagram of a control apparatus according to an embodiment of this application; and
FIG. 16 is another schematic block diagram of a control apparatus according to an embodiment of this application.

### DESCRIPTION OF EMBODIMENTS

Terms used in embodiments of this application are only used to explain specific embodiments of this application, but are not intended to limit this application.

In embodiments of this application, several parts such as a structure of an electronic apparatus that supports a wireless connectivity adaptive bus architecture (Connectivity Adaptive Bus Architecture, CABA) and an application transmission control method of the electronic apparatus are described, and the technical solutions provided in embodiments of this application are described.

In embodiments of this application, the CABA may help the electronic apparatus perform, between an application layer and a communication layer, a control operation such as selection, switching, and combination on a communication module corresponding to a wireless communication protocol used to transmit service data. In addition, in a scenario in which the electronic apparatus is used as a relay device to forward the service data, data forwarding without using an application layer may be further implemented. In an example, the electronic apparatus supporting the CABA may obtain, at a control layer between the application layer and the communication layer, communication statuses of communication connections corresponding to all wireless communication protocols corresponding to device identifiers of other electronic apparatuses, and perform control operations such as selection, switching, combination, and relay. In addition, a wireless communication protocol used for transmitting the service data may be adaptively selected based on global environment information of communication connections corresponding to a plurality of wireless communication protocols. Based on this, for an application in the electronic apparatus supporting the CABA, it is not necessary to consider which wireless communication protocol is used to transmit the service data. Details are described below.

### Embodiment 1

The following first describes an example of an application scenario related to embodiments of this application.

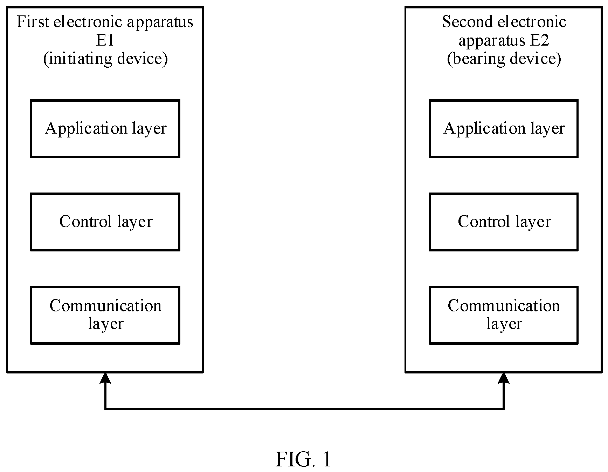

FIG. 1 is a schematic diagram of a communication system according to an embodiment of this application. As shown in FIG. 1, the system may include at least two electronic apparatuses, for example, a first electronic apparatus E1 and a second electronic apparatus E2.

In an example, the E1 may be a data sending end, or may be referred to as an initiating device, and the E2 may be a data receiving end, or may be referred to as a bearing device. In an example, the electronic apparatus involved in the technical solutions provided in embodiments of this application may be an electronic device that supports wireless communication, such as a mobile phone, a tablet computer, a smart watch, a headset, a router, or the like.

In another example, any electronic apparatus in embodiments of this application may also be a communication chip that supports at least one wireless communication protocol. In embodiments of this application, the communication chip that supports the wireless communication protocol may be located in any electronic device mentioned in embodiments of this application. In other embodiments of this application, a structure and a function of the electronic apparatus when the electronic apparatus is a communication chip are described in detail.

The electronic apparatus in embodiments of this application may use a brand new system architecture.

An example in which the electronic apparatus is an electronic device is used for description below.

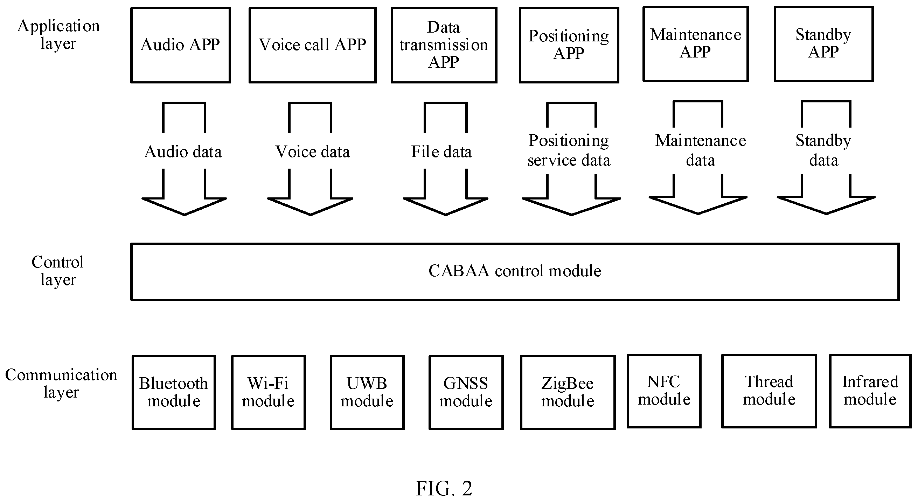

In embodiments of this application, as shown in FIG. 1, both the E1 and the E2 may include an application layer, a control layer, and a communication layer. In an example, both the E1 and the E2 may use a wireless connectivity adaptive bus architecture (Connectivity Adaptive Bus Architecture, CABA) shown in FIG. 2.

FIG. 2 is a schematic diagram of an architecture of an electronic apparatus according to an embodiment of this application.

As shown in FIG. 2, an application layer may include one or more application (Application, APP) modules, which may also be referred to as an application or an application program below.

In embodiments of this application, in an example, the application module may be a service APP or a high-layer protocol module. The application layer may be configured to obtain one or more service requests, and a plurality of service requests may be triggered by one module in the application layer, or may be triggered by a plurality of modules in the application layer. The service request may be used to request to transmit an instruction and data that are related to a service. For example, the module in the application layer may trigger a plurality of service requests such as audio transmission, voice call, video transmission, high-layer protocol data transmission, positioning, standby holding, and the like. The application layer may send a service request to a control layer to transmit an instruction and/or data related to the service.

As shown in FIG. 2, the control layer may include a control module. The control module may also be referred to as a CABA control module below.

In embodiments of this application, the control module may be configured to: after receiving the service request from the application layer, determine, from a communication module at a communication layer, a communication module suitable for transmitting the service data that is requested to be transmitted by the service request. Then, the control layer is further configured to indicate the communication module to establish a communication connection and transmit, based on the communication connection, a service-related indication and/or data. In embodiments of this application, the control layer may select a proper communication module based on a function requirement, a performance requirement, a multi-service combination transmission requirement, global environment information of the device, and the like that correspond to the service request. Details are described in embodiments of this application.

As shown in FIG. 2, the communication layer may include: one or more communication modules.

In embodiments of this application, each communication module may support a low-layer communication protocol. In an example, the communication module in the communication layer may be one or more of communication modules such as a Wi-Fi module, a Bluetooth (BT) module, a global navigation satellite system (Global Navigation Satellite System, GNSS) module, an ultra wide band (Ultra Wide Band, UWB) module, a Zigbee (Zigbee) module, a near field communication (Near Field Communication, NFC) module, a home Internet of Things communication protocol (Thread) module, an infrared module, or a global positioning system (Global Positioning System, GPS) module.

The Wi-Fi module may support a basic Wi-Fi protocol and a Wi-Fi fine timing measurement (fine timing measurement, FTM) protocol. The Bluetooth module may support a basic BT protocol, a BT angle of arrival (AoA) protocol, and a BT high accuracy distance measurement (High Accuracy Distance Measurement, HADM) protocol.

In actual application, in an example, the Wi-Fi protocol may be a related protocol or standard in 802.11. In another example, the Bluetooth protocol may be a related protocol or standard in 802.15.

It should be noted that in embodiments of this application, the foregoing protocol may alternatively use another alternative protocol. For example, the Bluetooth protocol may use a green tooth protocol in a sparklink (sparklink) protocol as an alternative, or the foregoing protocol may use another protocol in the sparklink protocol as an alternative. This is not limited in embodiments of this application.

In embodiments of this application, each communication module may establish, switch, or release a communication connection between a local device and another device based on an indication of the control layer. In addition, each communication module may further report, to the control layer, link status information related to each established communication connection, and detected signal status information related to another device. In an example, the link status information and the signal status information may be used to determine global environment information of the device.

In embodiments of this application, in an optional implementation, each communication protocol may correspond to one MAC layer module. In an optional implementation, the MAC layer module may include a MAC layer control unit and a MAC layer processing unit. Table 1 is a schematic diagram of a communication protocol and a corresponding MAC module.

**Table 1**

| Low-layer communication protocol | Bluetooth | Wi-Fi | UWB | GNSS | Zigbee | NFC | Thread | Infrared |
|---|---|---|---|---|---|---|---|---|
| MAC layer module | BMAC | WMAC | UMAC | PVT | UMAC | UMAC | UMAC | UMAC |
| MAC layer control unit/host module | BTH | HMAC | HMAC | LBS/ HMAC | HMAC | HMAC | HMAC | HMAC |
| MAC processing unit | BTC | DMAC | DMAC | PVT | DMAC | DMAC | DMAC | DMAC |

In embodiments of this application, in an optional implementation, a subsystem corresponding to each communication protocol may include a MAC module. The MAC module in each subsystem includes a MAC layer control unit and a MAC layer processing unit. A CABA control module may distribute data between an application and a subsystem including a MAC layer control unit.

In another optional implementation, a subsystem corresponding to each communication protocol may include the MAC layer processing unit. The CABA control module may also distribute data between the application and the subsystem including the MAC layer processing unit.

It should be noted that when forwarding the service data sent by the application to a subsystem corresponding to a selected communication protocol, the CABA may encapsulate a source module address and a destination module address before the service data. In an example, the source module address may be an application address, and the destination module address may be an identifier of the MAC layer control unit. In another example, the source module address may be an identifier of the MAC layer control unit, and the destination module address may be an identifier of the MAC layer processing unit.

It should be further noted that after receiving data from the MAC layer control unit or the CABA, the MAC layer processing unit re-encapsulates to-be-transmitted service data, adds a MAC layer address packet header corresponding to the communication protocol, and continues to forward the data to a baseband processing unit.

In embodiments of this application, the MAC layer control unit may be referred to as a MAC layer control module or a host module, and meanings of the MAC processing unit, the MAC layer processing unit, the MAC layer processing module, and the MAC processing module are the same.

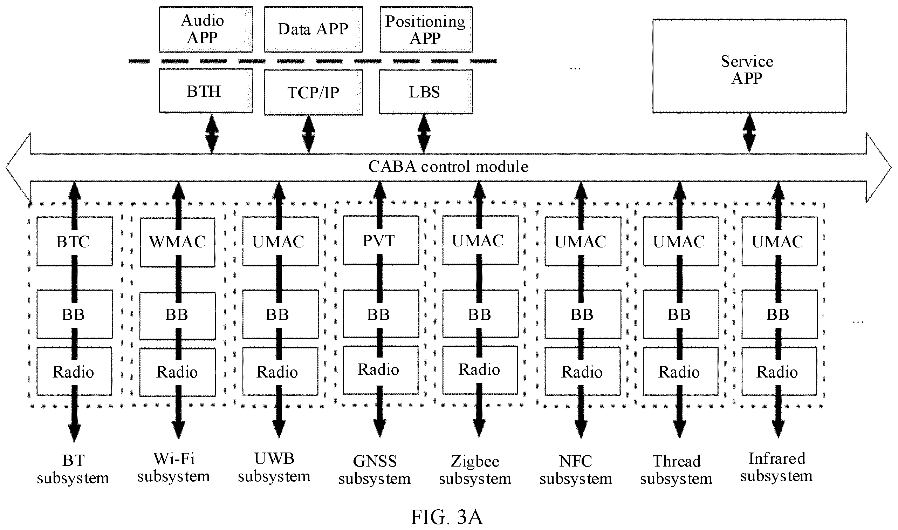

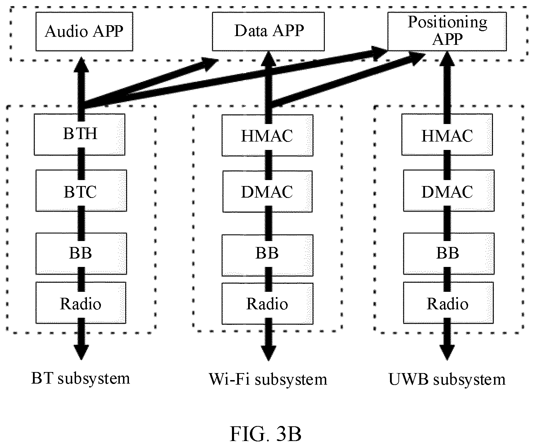

FIG. 3A is a schematic diagram of a CABA architecture according to an embodiment of this application. FIG. 3B is a schematic diagram of a structure of a communication subsystem according to an embodiment of this application.

In embodiments of this application, a CABA control module may be located on a communication module corresponding to each low-layer communication protocol. Each communication module may support different low-layer communication protocols. In embodiments of this application, implementations of each communication module include but are not limited to the following two implementations.

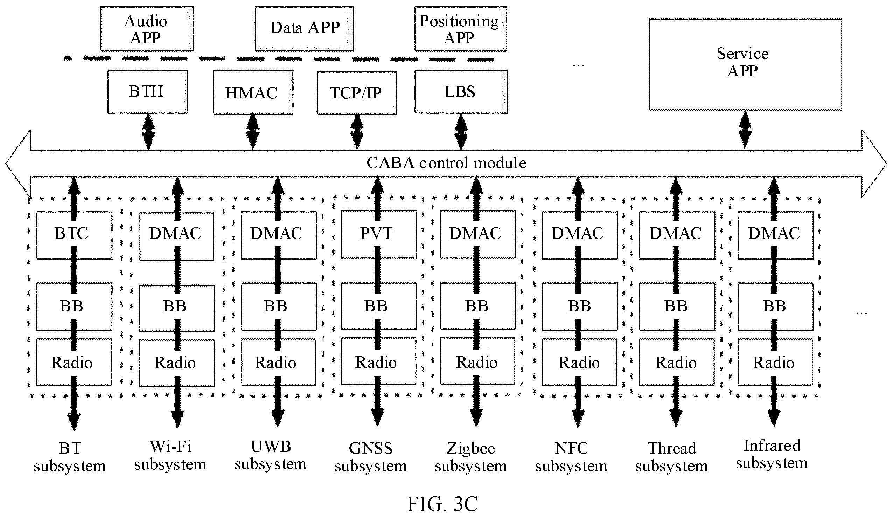

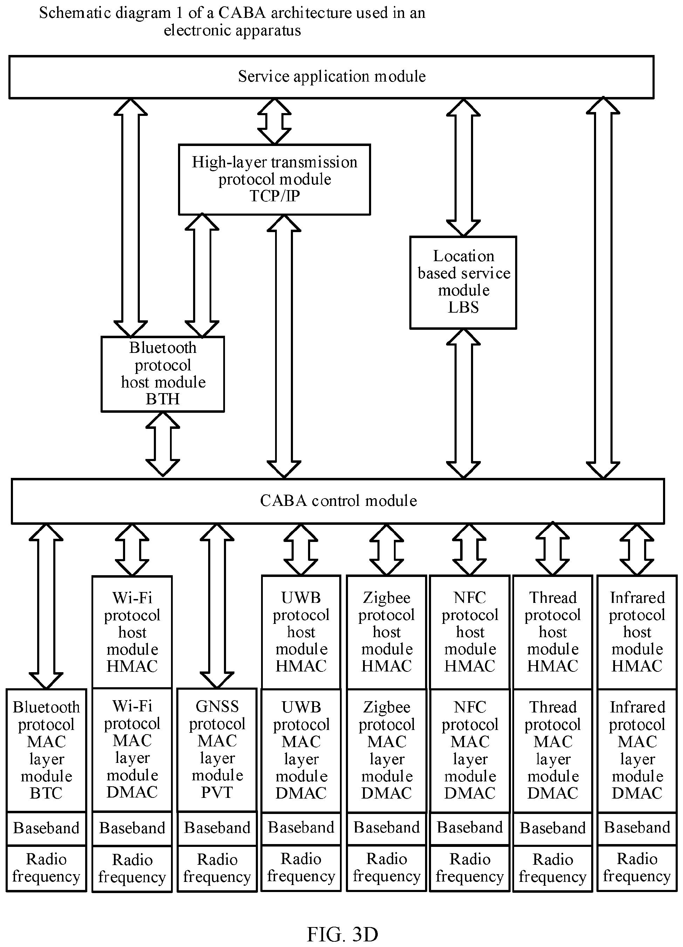

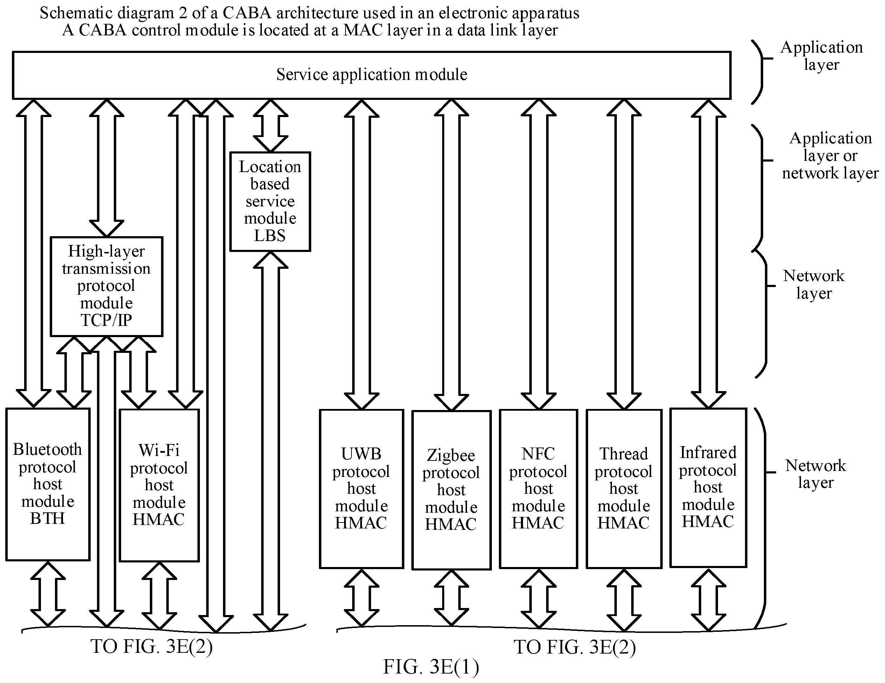

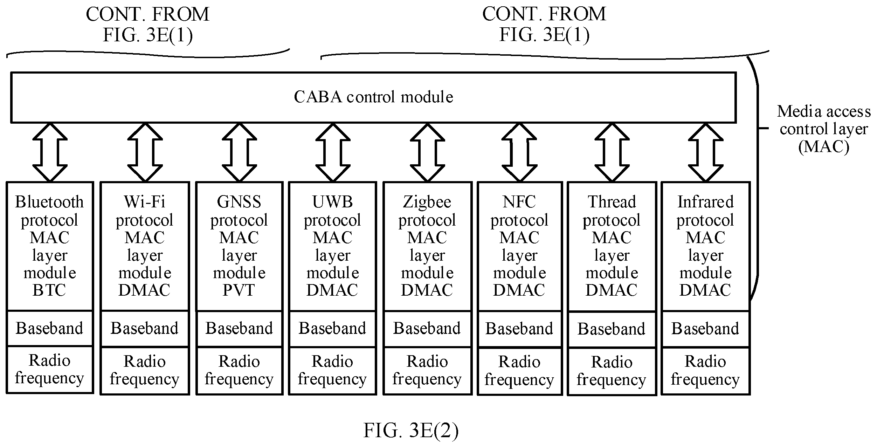

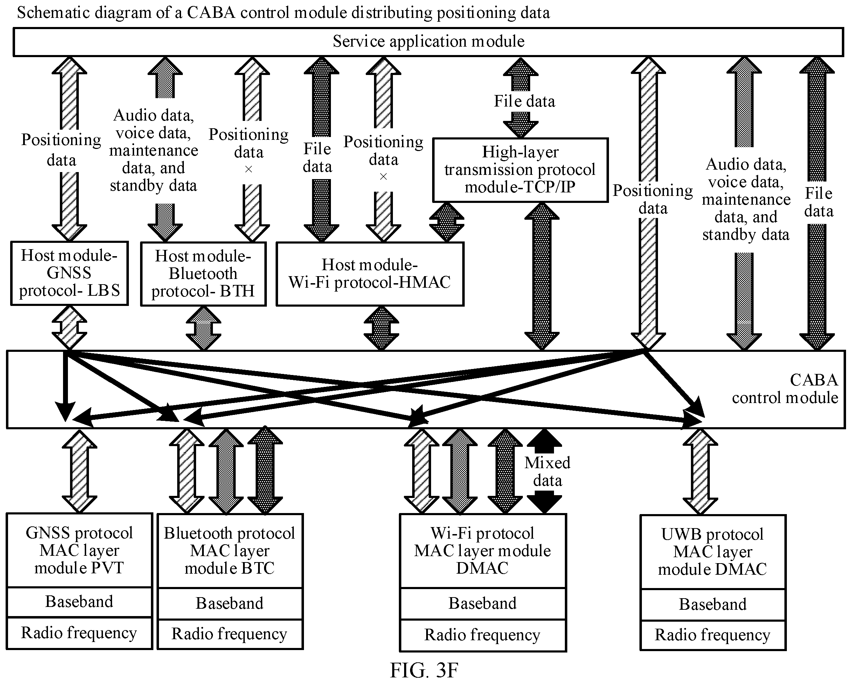

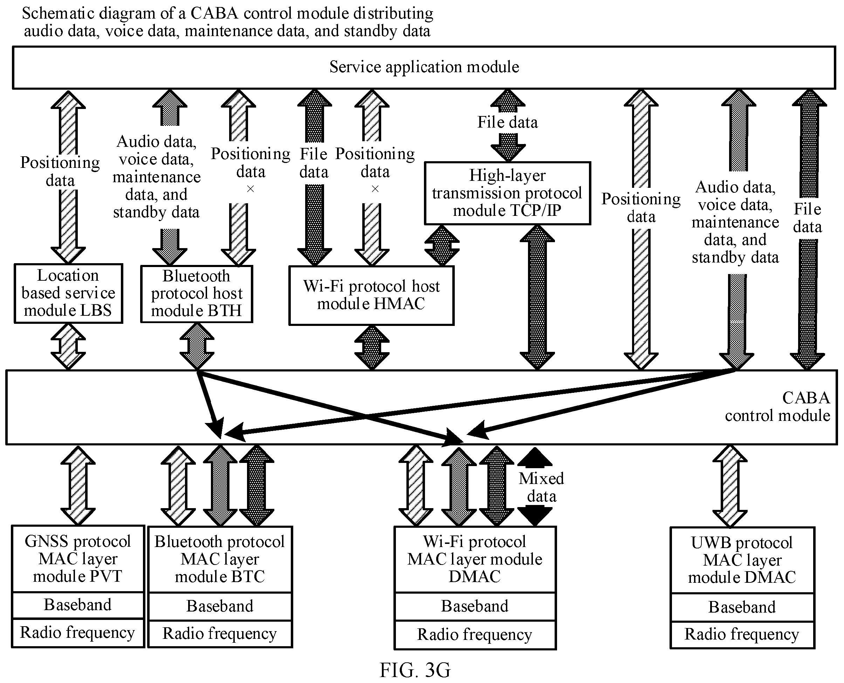

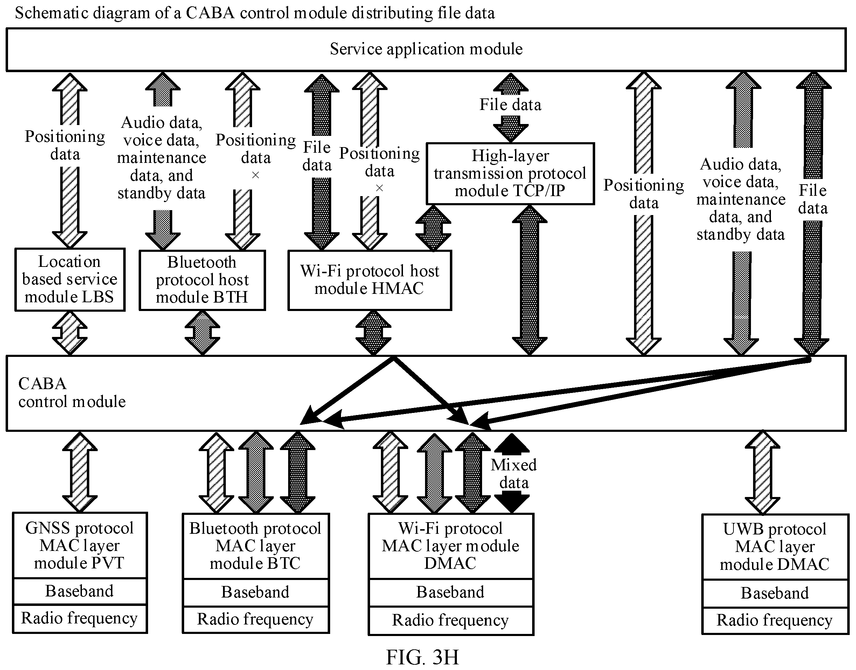

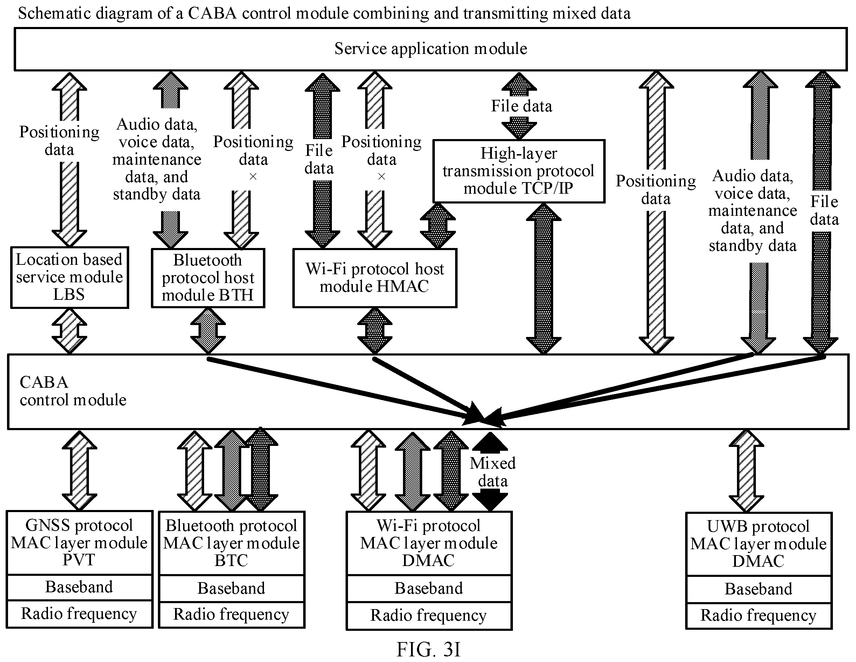

As shown in FIG. 3, an electronic apparatus may include subsystems corresponding to a plurality of low-layer communication protocols. For example, the electronic apparatus may include a BT subsystem, a Wi-Fi subsystem, a UWB subsystem, a GNSS subsystem, a Zigbee subsystem, an NFC subsystem, a Thread subsystem, an infrared subsystem, and the like. Each subsystem may include a MAC layer control unit, a MAC layer processing unit, a baseband (Baseband, BB), a radio frequency (Radio), and the like that are corresponding to each communication protocol. In an optional implementation, each communication module may include a media access control (media access control, MAC) layer module, a baseband, and a radio frequency in each communication subsystem; and the CABA control module may be located above a MAC layer module in each communication subsystem. For example, the CABA control module may be located between each communication subsystem and a high-layer protocol module, or may be located between each communication subsystem and a service APP.

For example, referring to FIG. 3A, the MAC layer module in the Wi-Fi subsystem may be a Wi-Fi MAC (WMAC) module, the MAC layer module in the GNSS subsystem may be a position velocity temperature (Position, Velocity, Time, PVT) module, and the MAC layer modules in the UWB subsystem, the Zigbee subsystem, the NFC subsystem, the Thread subsystem, and the infrared subsystem may be universal motion and automation controller (Universal Motion and Automation Controller, UMAC) modules.

In another optional implementation, the MAC layer modules corresponding to the communication protocols may be further classified into a MAC layer control module and a MAC layer processing module. Each communication module may include a MAC layer processing module, a baseband, and a radio frequency in each communication subsystem; and the CABA control module may also be located between the MAC layer control module and the MAC layer processing module.

For example, referring to FIG. 3B, the MAC layer control module in the BT subsystem may be a Bluetooth Host (BTH) module, and the MAC processing module in the BT subsystem may be a Bluetooth control module (Bluetooth Controller, BTC). The WMAC module in the Wi-Fi subsystem may include a host MAC (Host MAC, HMAC) module and a device MAC (Device MAC, DMAC) module. The UMAC module may further include an HMAC module and a DMAC module.

In embodiments of this application, in an electronic apparatus using a CABA architecture, there may be a plurality of implementations for a communication manner between a service APP in an application layer of the electronic apparatus and the CABA control module.

In an optional implementation, referring to a right side in FIG. 3A, some service APPs may directly communicate with the CABA control module. It should be noted that the service APPs that directly communicate with the CABA control module may be service APPs that support the CABA architecture, or may be service APPs that do not support the CABA architecture.

In an example, the service APPs that support the CABA architecture may send, to the CABA control module, a transmission request for requesting to transmit the service data, without paying attention to a low-layer communication protocol used for transmitting the service data. In actual application, the transmission request sent by the service APPs that support the CABA may not include information related to the communication module. It should be noted that the service APP supporting the CABA may transmit a plurality of pieces of service data such as audio, data, a positioning service, and a standby service. A type of service data that the service APP supporting the CABA architecture requests to transmit is not limited in embodiments of this application.

In another example, the transmission request sent by the service APP that does not support the CABA architecture may be sent to a communication module corresponding to the selected low-layer communication protocol, or the transmission request sent by the service APP that does not support the CABA architecture may include a communication module corresponding to the selected low-layer communication protocol. For the first case, the CABA control module may be configured to redirect, on a system bus, a message sent by the application layer to the communication layer to the CABA control module. In the second case, the CABA control module may ignore the communication module specified in the transmission request, and select a proper communication module based on current global environment information of the electronic apparatus. In actual application, the CABA control module may also be set to allow the communication module carried in the transmission request to be preferentially selected.

In still another optional implementation, referring to service APPs such as an audio APP, a data APP, and a positioning APP shown on a left side in FIG. 3A. The service APPs may not be directly connected to the CABA control module, and the service APPs may communicate with the CABA control module through a host (Host) module corresponding to the low-layer communication protocol or a protocol module corresponding to the high-layer communication protocol.

It should be noted that the service APP using this implementation may not need to support the CABA architecture.

In an example, the audio APP may be an APP that does not support the CABA architecture, and a low-layer communication protocol selected by the audio APP may be BT. The service APP that does not support the CABA architecture may send a transmission request for requesting to transmit the service data to the host (Host) module of the low-layer communication protocol. For example, the host module of the Bluetooth module may be a Bluetooth Host (BTH) module.

In another example, the data APP may be an APP that does not support the CABA architecture. The data APP may determine, based on a data transmission requirement of the data APP, that a high-layer communication protocol for transmitting the service data is TCP/IP. The data APP may send, to a TCP/IP module, a transmission request for requesting to transmit the service data. The TCP/IP module may send, to the CABA control module, the transmission request for transmitting the service data without paying attention to transmitting the service data by using the low-layer communication protocol.

In still another example, the positioning APP may be an APP that does not support the CABA architecture, and a communication control module corresponding to a low-layer communication protocol selected by the positioning APP may be an LBS module. The positioning APP that does not support the CABA architecture may send, to the LBS module, a transmission request for requesting to transmit the service data. It should be noted that the LBS module may be a communication control module corresponding to the BT AoA, Wi-Fi FTM, or GPS protocol. In other embodiments of this application, detailed descriptions are provided, and details are not described herein again.

It should be noted that referring to FIG. 3B, a communication control module corresponding to each low-layer communication protocol may communicate with a plurality of service APPs.

It should be further noted that both the communication control module and the protocol module may be located at the control layer in the foregoing embodiments.

In embodiments of this application, in the electronic apparatus using the CABA architecture, installation of an APP that does not support the CABA may be allowed, and installation of an APP that supports the CABA may also be allowed. This enables the electronic apparatus using the CABA architecture to have good compatibility.

It should be noted that for the APP that does not support the CABA, in a downlink direction, a message sent by the APP that does not support the CABA to a protocol module corresponding to the high-layer communication protocol or the high-layer communication control module of each low-layer communication protocol, each high-layer protocol module or communication module may directly forward the message sent by the APP to the CABA control module. In an uplink direction, the message sent by the CABA control module to the APP that does not support the CABA may be forwarded to the APP that does not support the CABA through the protocol module that is passed through in the downlink direction along an original path. In the following embodiments, the service APP supporting the CABA is used as an example for description.

In actual application, the CABA control module may be located at a MAC layer. Different from performing data distribution and handover at an application layer or a network layer, the CABA control module may implement functions such as distribution and handover at the MAC layer, and implement conversion and distribution of "inter-system (such as BT, Wi-Fi, UWB, and the like)" data at the MAC layer.

In embodiments of this application, FIG. 3D is a schematic diagram of a hierarchical structure of an electronic apparatus using a CABA architecture shown in FIG. 3A; and FIG. 3E(1) and FIG. 3E(2) are schematic diagrams of a hierarchical structure of an electronic apparatus using a CABA architecture shown in FIG. 3C. FIG. 3D to FIG. 3F show a plurality of optional implementations of a location of a CABA control module in an electronic apparatus according to an embodiment of this application.

Each of the at least two communication circuits may include: a media access control MAC unit corresponding to a wireless communication protocol supported by each communication circuit or a MAC layer processing unit corresponding to a wireless communication protocol supported by each communication circuit.

It should be noted that the CABA control module may include at least one of the following modules: an application module, a high-layer transmission protocol module, and a host module corresponding to at least one wireless communication protocol.

In embodiments of this application, FIG. 3F is a schematic diagram of distributing positioning data by a CABA control module in the electronic apparatus shown in FIG. 3E(1) and FIG. 3E(2); FIG. 3G is a schematic diagram of distributing data such as audio by a CABA control module in the electronic apparatus shown in FIG. 3E(1) and FIG. 3E(2); FIG. 3H is a schematic diagram of distributing file data by a CABA control module in the electronic apparatus shown in FIG. 3E(1) and FIG. 3E(2); and FIG. 3I is a schematic diagram of combining and transmitting mixed data by a CABA control module in the electronic apparatus shown in FIG. 3E(1) and FIG. 3E(2).

It should be noted that FIG. 3F to FIG. 3I are merely examples. For example, during combined transmission of mixed data, the CABA control module may also obtain a plurality of types of data from two or more modules located at an upper layer of the CABA control module in FIG. 3I, and perform combined transmission. This is not limited in embodiments of this application.

When the CABA control module distributes the service data transmitted from a module located above the CABA control module to a low-layer communication module, the CABA control module may encapsulate the service data. For example, when the service data received from the BTC is to be forwarded to DMAC corresponding to the Wi-Fi protocol, the CABA control module may encapsulate a packet header before the service data received from the BTC, for example, the packet header may be information that is required by the DMAC and that is added according to a rule of adding a packet header when an HMAC module corresponding to the Wi-Fi protocol forwards the service data to the DMAC corresponding to the Wi-Fi protocol. In addition, the packet header may further include a BTC identifier, namely, a source module identifier, and a DMAC identifier corresponding to the Wi-Fi protocol, namely, a destination module identifier. In an example, the CABA control module may encapsulate, based on a received packet header required by the MAC unit or the MAC layer processing unit in the communication module, the service data that needs to be distributed. When receiving, from the low-layer communication module, the service data in which the packet header is encapsulated, the CABA control module may forward the decapsulated service data to the BTC based on the source module identifier added to the packet header. It should be noted that for a positioning service, a peer end may also be a GPS that does not support the CABA architecture. In other words, in some scenarios, processing performed by a sending end and a receiving end may also be unequal. For details, refer to related descriptions in other embodiments of this application. Details are not described herein again.

In embodiments of this application, in an optional implementation, data may be forwarded between an initiating device and a bearing device through a relay device.

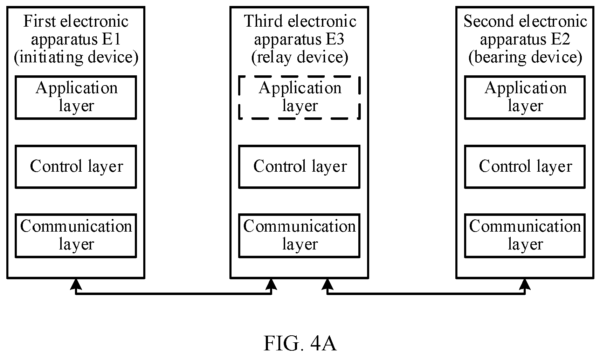

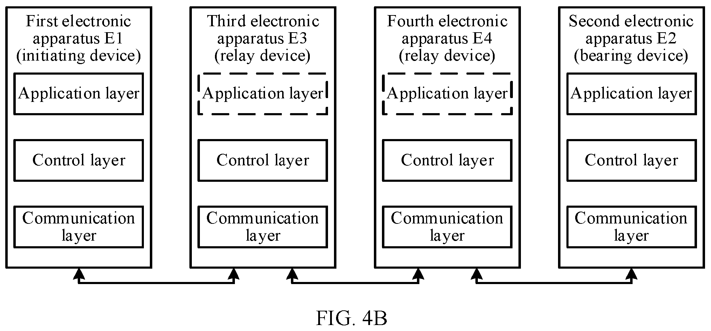

FIG. 4A to FIG. 4B are a group of schematic diagrams of another communication system according to an embodiment of this application. As shown in FIG. 4A and FIG. 4B, the system may further include one or more relay devices, for example, a third electronic apparatus E3 and a fourth electronic apparatus E4.

In an example, a control layer and a communication layer in the E3 and the E4 may use the implementation shown in the foregoing embodiments. It should be noted that in an example, the relay device configured to forward data may not include an application layer.

For example, modules included in each device in embodiments of this application may be shown in Table 2-1 and Table 2-2. Table 2-1 and Table 2-2 show a group of schematic diagrams of modules and corresponding identifiers included in each device.

**Table 2-1**

| | Name | Identifier | Name | Identifier |
|---|---|---|---|---|
| | First electronic apparatus/initiating device | E1 | Second electronic apparatus/bearing device | E2 |
| Application layer | Application module of E1 | APP 11 | Application module of E2 | APP 21 |
| Control layer | Control module of E1 | CABA 1 | Control module of E2 | CABA 2 |
| Communication layer | First communication module of E1 | COMM 11 | First communication module of E2 | COMM 21 |
| | Second communication module of E1 | COMM 12 | Second communication module of E2 | COMM 22 |

**Table 2-2**

| | Name | Identifier | Name | Identifier |
|---|---|---|---|---|
| | Third electronic apparatus/initiating device | E3 | Fourth electronic apparatus/bearing device | E4 |
| Application layer (optional) | Application module of E3 | APP 31 | Application module of E2 | APP 41 |
| Control layer | Control module of E3 | CABA 3 | Control module of E4 | CABA 4 |
| Communication layer | First communication module of E3 | COMM 31 | First communication module of E4 | COMM 41 |
| | Second communication | COMM 32 | Second communication | COMM 42 |
| | module of E3 | | module of E4 | |

It should be noted that a quantity of communication modules in each device may be one or more. In an example, in each device, the first communication module may be a Bluetooth module, and the second communication module may be a Wi-Fi module. A quantity of application modules in each device may also be one or more. In an example, each device may include a system application module, an application module configured to make a call, an application module configured to play audio and video, and the like.

It should be further noted that the application module in each device may be a service APP in an application layer, or may be a protocol module corresponding to a high-layer communication protocol. The application module may be an application module that supports the CABA or an application module that does not support the CABA.

In embodiments of this application, the control module in the control layer may be implemented through software or hardware.

In an example, when the control module is implemented in a hardware manner, the control module may be a chip.

In an example, when the control module is implemented in a software manner, the control module may be a component generated by a control program in an operating system, and the component may be configured to control data forwarding in a system bus.

In embodiments of this application, there are a plurality of implementations of a connection manner between the control module and another module.

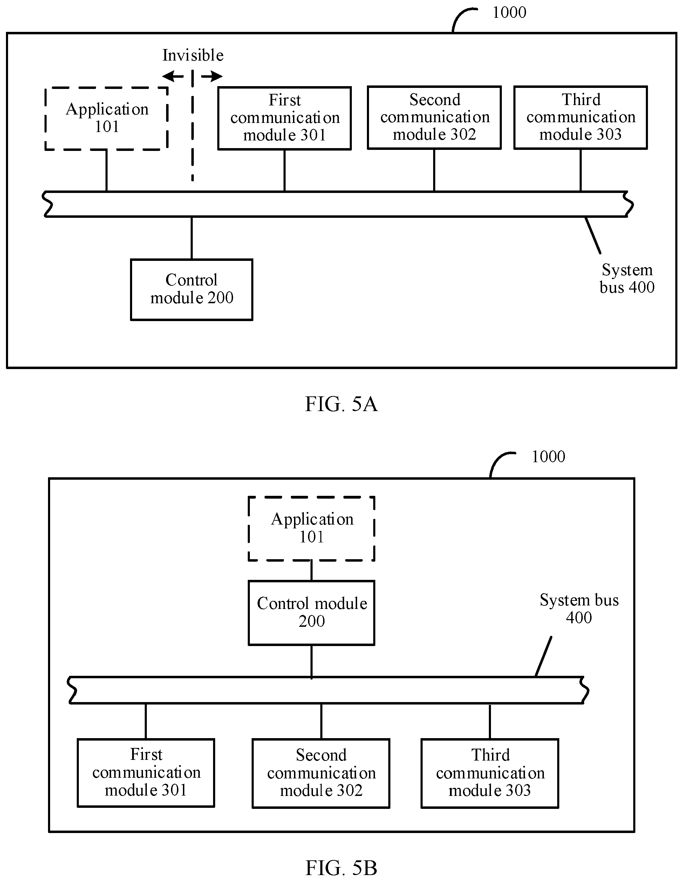

FIG. 5A to FIG. 5B are a group of schematic diagrams of a connection manner between a control module and another module according to an embodiment of this application.

Referring to FIG. 5A, in an example, the control module and the another module in the device may be separately connected to a system bus, and the another module may separately communicate with the control module through the system bus. In an optional implementation, if the device includes an application module, direct communication is not allowed between the application module and the communication module. In an example, the application module and the communication module may be set to be invisible to each other on the system bus.

Referring to FIG. 5B, in an example, the communication module in the device may also be connected to the control module through a bus, the application module may communicate with the control module, and the application module may transmit data and an instruction to the communication module through the control module.

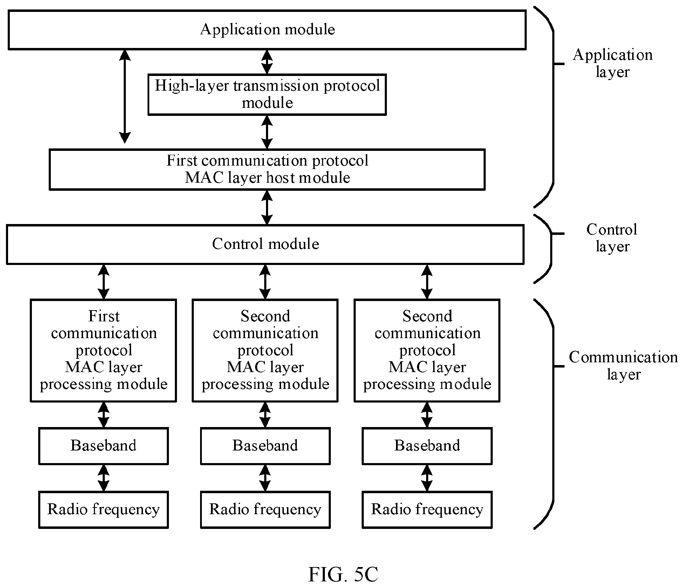

In actual application, FIG. 5C is still another schematic diagram of a manner of connecting a control module to another module according to an embodiment of this application. An electronic apparatus may include: an application module located at an application layer, a high-layer transmission protocol module, a MAC layer host module corresponding to a first communication protocol, a control module located at a control layer, and several communication subsystems located at a communication layer, for example, a MAC layer processing module corresponding to the first communication protocol and a baseband and a radio frequency corresponding to the first communication protocol, a MAC layer processing module corresponding to a second communication protocol and a baseband and a radio frequency corresponding to the second communication protocol, and a MAC layer processing module corresponding to a third communication protocol and a baseband and a radio frequency corresponding to the third communication protocol. The high-layer transmission protocol module may also be located at a network layer of an OSI seven-layer network protocol. This is not limited in this application. In other words, the control module may also be located between a network layer and a communication layer. The communication layer may be located at a MAC layer of the OSI.

Embodiments of this application further provide a schematic diagram of a structure of an electronic apparatus.

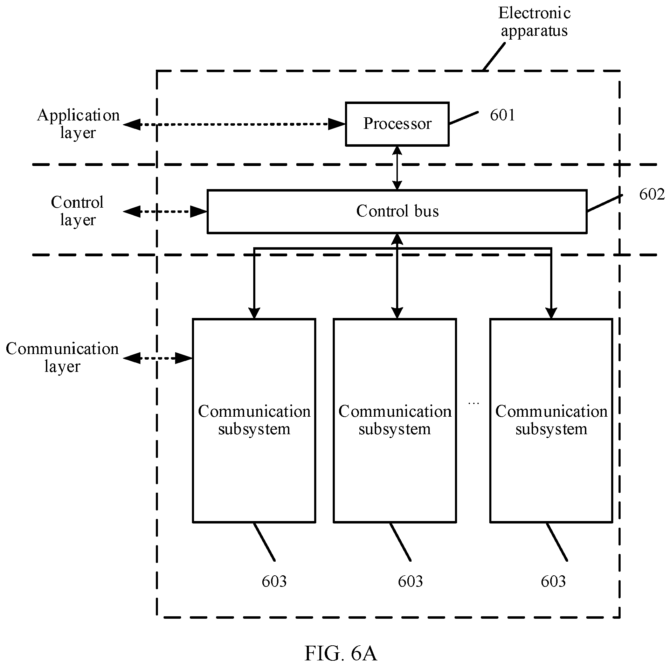

FIG. 6A is a schematic diagram of a structure of an electronic apparatus according to an embodiment of this application. As shown in FIG. 6A, in actual application, the electronic apparatus may include: a processor 601, a control bus 602, and at least two communication subsystems 603.

The processor may be configured to execute an application program to implement a function in an application layer.

The control bus may be configured to distribute service data between the processor and the communication subsystem. The control bus may select, based on the service data, a communication subsystem corresponding to a communication protocol that meets a transmission requirement of the service data.

Any communication subsystem may be configured to forward the service data received from the control bus to another electronic apparatus based on the communication protocol corresponding to the communication subsystem, or receive service data from another electronic apparatus and forward the service data to the control bus.

In an example, the processor 601 may also be referred to as an application processor.

It should be noted that in embodiments of this application, steps performed by the application layer or any module or unit in the application layer may be performed by the processor. In embodiments of this application, all steps performed by the control layer or the control module may be performed by the control bus. In embodiments of this application, all steps performed by a communication module or a communication circuit may be performed by the communication subsystem.

In an example, in an electronic apparatus used as a data sending end, the processor may be configured to execute an application program to generate the service data. The service data may include address information of a data receiving end, for example, an address of a bearing device and an identifier of an application program in the bearing device. The control bus may be configured to: receive the service data, and selectively distribute the service data to at least one communication subsystem of at least two communication subsystems. The communication subsystem may be configured to: receive the service data distributed to the communication subsystem, encapsulate the service data according to a communication protocol corresponding to the communication subsystem, and then send the encapsulated service data to the data receiving end through a communication connection established based on the communication protocol corresponding to the communication subsystem.

In another example, in an electronic apparatus used as the data receiving end, the communication subsystem may decapsulate the encapsulated service data received from the data sending end, and send the decapsulated service data to the control bus. The control bus may distribute, based on address information that is of the data receiving end and that is carried in the service data, the service data to an application program indicated by the address information. The processor is further configured to: when executing the application program, receive the service data and complete a service function requested by the service data.

It should be further noted that in embodiments of this application, each communication subsystem has a plurality of implementations, and based on a function corresponding to the communication subsystem, there are also a plurality of implementations for processing performed by the control bus when the control bus distributes the service data.

In an optional implementation, if the control bus receives the service data from a MAC layer control module, the control bus may forward the service data to a MAC layer processing module corresponding to one or more communication protocols.

In an optional implementation, if the control bus receives service data from an application or a high-layer communication protocol module, the control bus may also forward the service data to a MAC control module corresponding to one or more communication protocols.

In actual application of embodiments of this application, the electronic apparatus has a plurality of implementations. For example, the electronic apparatus may be an electronic device, or may be a chip or a chip set.

In embodiments of this application, there are a plurality of implementations of a position of a control circuit in the electronic apparatus.

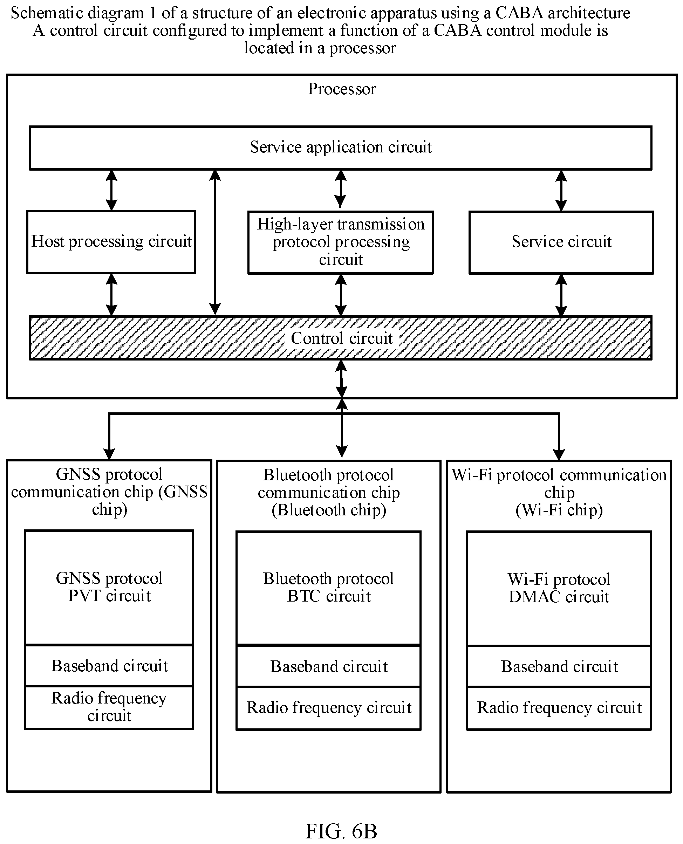

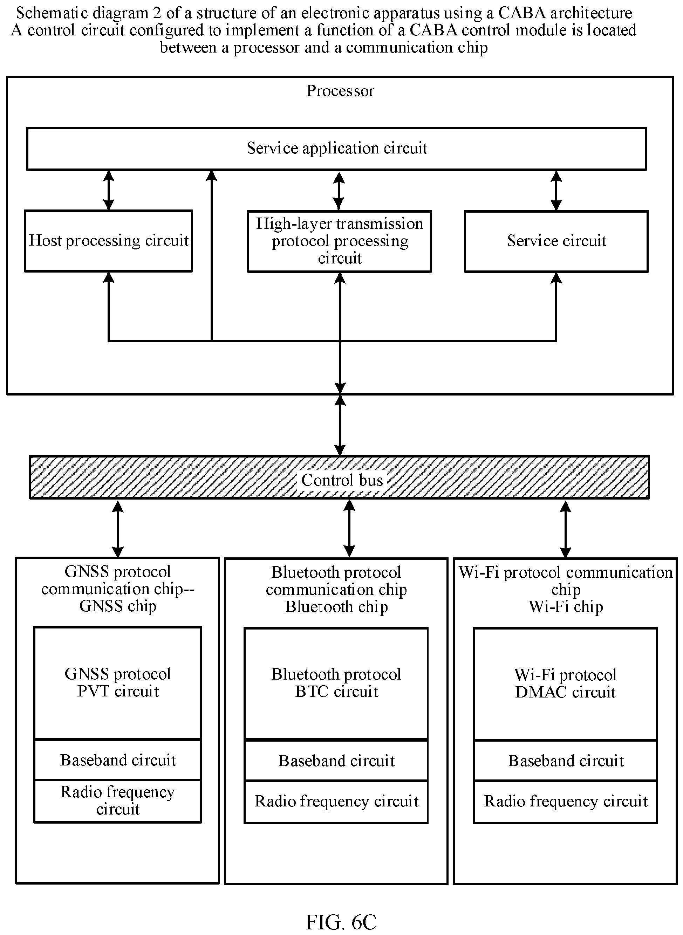

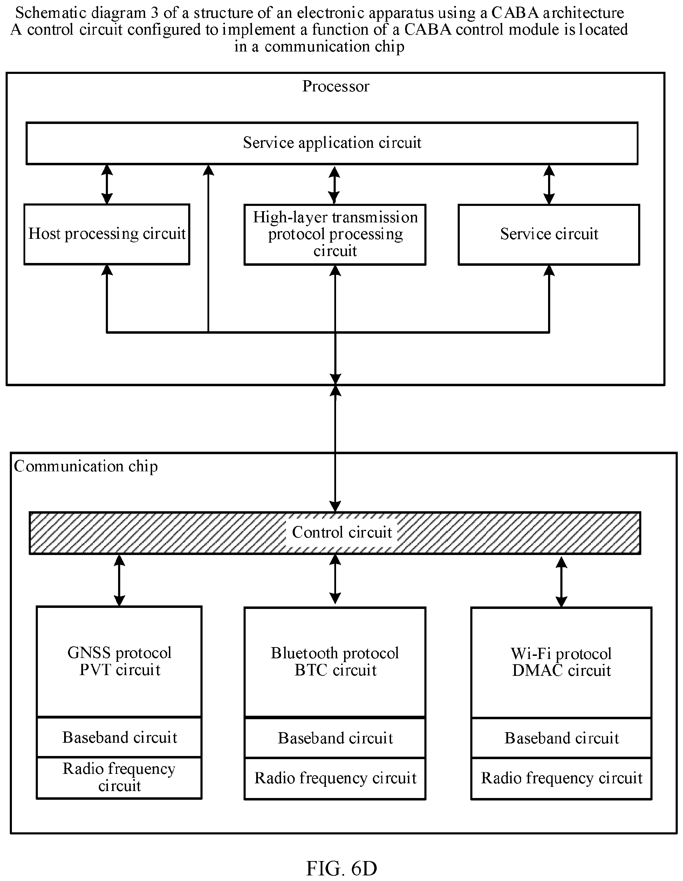

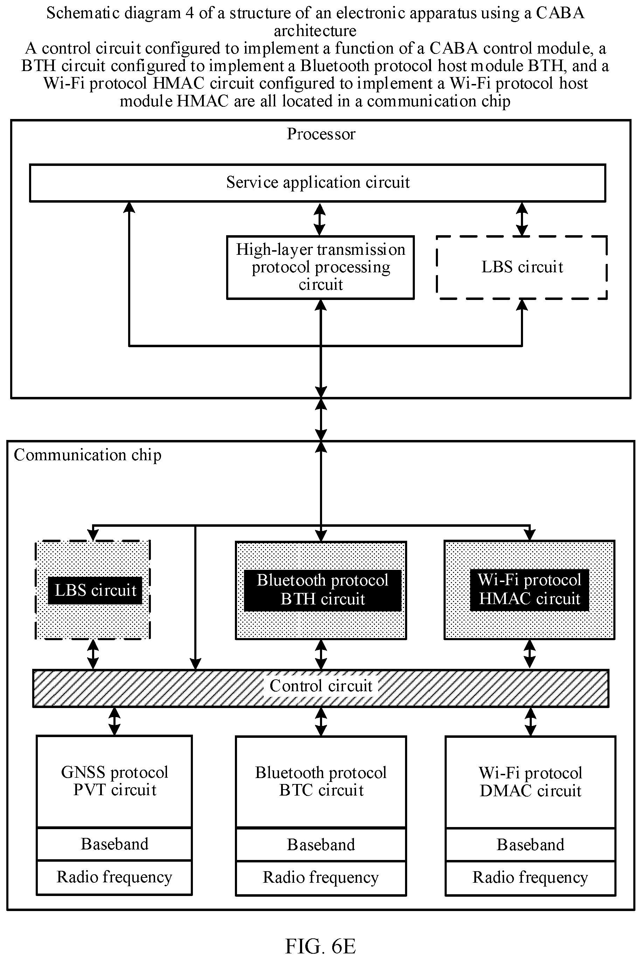

FIG. 6B is a schematic diagram 1 of a detailed structure of an electronic apparatus according to an embodiment of this application. FIG. 6C is a schematic diagram 2 of a detailed structure of an electronic apparatus according to an embodiment of this application. FIG. 6D is a schematic diagram 3 of a detailed structure of an electronic apparatus according to an embodiment of this application. FIG. 6E is a schematic diagram 4 of a detailed structure of an electronic apparatus according to an embodiment of this application.

As shown in FIG. 6B, the control circuit may be located in a processor, and the communication circuits may be located in different communication chips (as shown in FIG. 6B), or may be located in a same communication chip (not shown in FIG. 6B).

As shown in FIG. 6C, the control circuit may be a control bus, and the control bus is configured to connect the processor and each communication chip.

As shown in FIG. 6D, the control circuit may be located in the communication chip. The communication chip may include communication circuits corresponding to a plurality of wireless communication protocols. The communication circuit may use an implementation of the communication circuit shown in any one of embodiments of this application.

As shown in FIG. 6E, a control circuit configured to implement a function of a CABA control module, a BTH circuit configured to implement a Bluetooth protocol host module BTH, and a Wi-Fi protocol HMAC circuit configured to implement a Wi-Fi protocol host module HMAC may all be located in the communication chip.

The following describes the method provided in embodiments of this application by using an example in which an initiating device is E1 and a receiving device is E2. It should be noted that a control module in any device in embodiments of this application may perform a method performed by a control module in another device in embodiments of this application.

Embodiments of this application provide a method for controlling data transmission between devices, which may be applied to an initiating device and a bearing device.

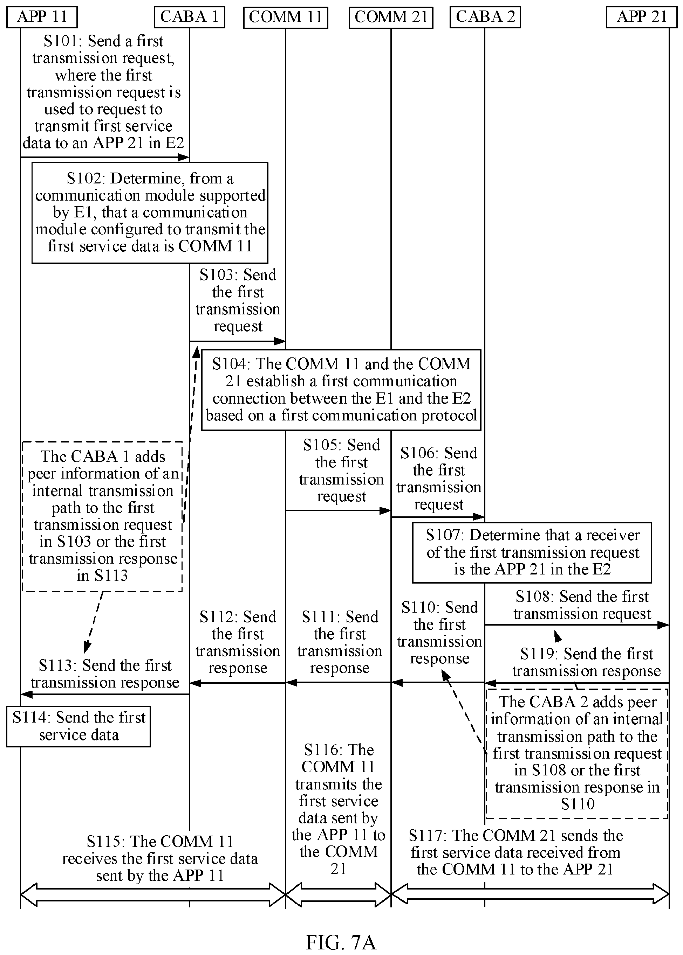

FIG. 7A is a schematic diagram 1 of a processing procedure of a control method according to an embodiment of this application. As shown in FIG. 7A, embodiments of this application may include the following steps.

S101: An APP 11 sends a first service request to a CABA 1, where the first service request is used to request to transmit first service data to an APP 21 in E2.

In embodiments of this application, there may be a plurality of service types of the first service data. For example, a positioning service, a phone service, an SMS messages service, an audio transmission service, a data transmission service, a payment service, or the like.

S102: The CABA 1 determines, from a communication module supported by E1, that a communication module configured to transmit the first service data is COMM 11.

In an example, the CABA 1 may determine, based on a communication protocol corresponding to a service type of the first service data, the communication module that transmits the first service data. In an example, the CABA 1 may store a communication protocol corresponding to a service type of each type of service data. When no other service data is transmitted between the E1 and the E2, the CABA 1 may determine a communication module corresponding to a communication protocol corresponding to the service type of the first service data as the communication module configured to transmit the first service data. Table 3 is a group of schematic diagrams of a communication protocol corresponding to a service type of service data.

**Table 3**

| Service type of service data | Optional communication protocol | Default communication protocol for single-service transmission status |
|---|---|---|
| Positioning | BT AoA/HADM, Wi-Fi FTM, UWB, and GPS | GPS |
| Standby/hibernation | BT and Wi-Fi | BT |
| Phone | BT and Wi-Fi | BT |
| Music | BT and Wi-Fi | BT |
| SMS messages | BT and Wi-Fi | BT |

In an example, the CABA 1 may determine a communication module corresponding to a default communication protocol as a communication module configured to transmit the service data. In another example, the CABA 1 may also set a selection rule to determine, from an optional communication protocol, a communication module suitable for transmitting the first service data.

It should be noted that there are a plurality of implementations in which the CABA 1 determines, from the communication module supported by the E1, the communication module configured to transmit the first service data. This is described in other embodiments of this application.

In embodiments of this application, after determining that the communication module configured to transmit the first service data is COMM 11, the CABA 1 may record the association information. Table 4 is a group of schematic diagrams of association information recorded by the CABA 1.

**Table 4**

| Service data | Sending end | Associated communication module | Communication connection between associated devices |
|---|---|---|---|
| First service data | APP 11 | COMM 11 | First communication connection |
| Second service data | APP12 | COMM 12 | Fifth communication connection |

In an example, the association information may indicate the APP 11 to send the first service data to the COMM 11, and indicate the COMM 11 to transmit the first service data to the E2.

In embodiments of this application, after S102, the CABA 1 may send peer end information corresponding to the first service data to the APP 11 and/or the COMM 11.

In a first optional implementation of sending the peer end information, the CABA 1 may send a sending port of the APP 11 to the COMM 11. Then, the COMM 11 may receive the first service data from the sending port of the APP 11. In an example, the CABA 1 may add the sending port of the APP 11 to a first service request, and send the first service request obtained after adding the APP 11 to the COMM 11.

In a second optional implementation of sending the peer end information, the CABA 1 may send a receiving port of the COMM 11 to the APP 11. Then, the APP 11 may send the first service data to the receiving port of the COMM 11. In an example, the CABA 1 may add the receiving port of the COMM 11 to a first service response, and send the first service response obtained after adding the COMM 11 to the APP 11.

In a third optional implementation of sending the peer end information, the CABA 1 may configure a first logical port presented to the APP 11 when the COMM 11 is used to transmit the first service data. For example, a mapping relationship between the receiving port of the COMM 11 and the first logical port may be set, it may be set that data sent to the first logical port is forwarded to the receiving port of the COMM 11, and data sent by the receiving port of the COMM 11 is sent through the first logical port. Then, the CABA 1 may send the first logical port to the APP 11. Then, the APP 11 may send the first service data to the first logical port. In an example, the CABA 1 may add the first logical port to the first service response, and send the first service response obtained after adding the first service response to the APP 11.

In this manner, when a transmission environment between the E1 and the E2 changes, the CABA 1 may change a communication module that transmits the first service data, reset a mapping rule, and forward the service data sent to the first logical port to a receiving port of another communication module. The APP 11 does not perceive this change.

It should be noted that the CABA 1 may also send the peer end information by using a message.

The following steps in embodiments of this application are described by using an example in which the third optional implementation is used to send the peer end information. Embodiments of this application is not limited thereto.

S103: The CABA 1 sends a first service request to the COMM 11.

After receiving the first service request, the COMM 11 may determine that the COMM 11 is determined as a communication module configured to transmit the first service data.

S104: The COMM 11 and COMM 21 establish a first communication connection between the E1 and the E2 based on a first communication protocol.

The COMM 21 and the COMM 11 in the E2 correspond to a same communication protocol.

In embodiments of this application, in an example, after S104, the method may further include the following steps.

S105: The COMM 11 sends a first service request to the COMM 21.

The first service request may include destination address information of the first service data, for example, the E2 and the APP 21.

S106: The COMM 21 sends a first service request to the CABA 2.

S107: The CABA 2 determines that a receiver of the first service request is the APP 21 in the E2.

The CABA 2 may determine, based on the destination address information, that the first service request is sent to the APP 21 in the electronic apparatus to which the CABA 2 belongs.

S108: The CABA 2 sends a first service request to the APP 21.

S109: The APP 21 sends a first service response to the CABA 2.

S110: The CABA 21 sends a first service response to the COMM 21.

S111: The COMM 21 sends a first service response to the COMM 11.

S112: The COMM 11 sends a first service response to the CABA 1.

In embodiments of this application, in an example, after S102, the method may further include the following steps.

S113: The CABA 1 sends a first service response to the APP 1.

The first service response may indicate an APP 1 to send the first service data.

S114: The APP 11 sends the first service data.

S115: The COMM 11 receives the first service data sent by the APP 11.

S116: The COMM 11 transmits the first service data sent by the APP 11 to the COMM 21.

S117: The COMM 21 sends the first service data received from the COMM 11 to the APP 21.

In an optional implementation, in S113, the CABA 1 may send a first service response including a first logical port to the APP 1. The first logical port is set to be that all data sent to the first logical port is sent to a receiving port of the COMM 11, and all data sent by the receiving port of the COMM 11 is sent through the first logical port.

It should be noted that a first internal channel through which the first service data sent by a sending port of the APP 11 arrives at the receiving port of the COMM 11 may pass through the CABA 1, or may not pass through the CABA 1. In an example, the first logical port may be a first port for communication between the CABA 1 and the APP 11, and the CABA 1 may forward, through a second port for communication with the COMM 11, the first service data received from the first port to the receiving port of the COMM 11.

In an optional implementation, in S110, the CABA 2 may send a first service request including a second logical port to the APP 2. All data sent by a receiving port of the COMM 21 set to the second logical port is sent through the second logical port, and all data sent to the second logical port is sent to the receiving port of the COMM 21.

It should be noted that a second internal channel through which the first service data passes from the receiving port of the COMM 21 to the sending port of the APP 21 may pass through the CABA 2, or may not pass through the CABA 2. In an example, the second logical port may be a first port for communication between the CABA 2 and the APP 21, and the CABA 2 may send, to the sending port of the APP 21 through the first port of the CABA 2, the first service data received from a second disconnection for communication with the COMM 21.

According to the technical solution provided in embodiments of this application, an application sends a service request to a control module, and the control module determines a communication module configured to transmit service data that is requested to be transmitted by the service request, so that the application may not pay attention to the communication module configured to transmit the service data. This reduces workload of the application. In addition, when the application does not need to determine which communication module to be used, the application also does not need to collect environment information collected by each communication module. This reduces an amount of data that needs to be processed by the application.

### Embodiment 2

Embodiments of this application further provide an optional implementation. In a processing process in which the CABA 1 determines the communication module configured to transmit the first service data in S102, when a service type of the first service data corresponds to two or more communication protocols, the CABA 1 may further select, based on global environment information, a function requirement, a performance requirement, and the like that correspond to the service type of the first service data, the communication module configured to transmit the first service data.

In an example, the CABA 1 may store a function requirement, a performance requirement, a multi-service combination transmission requirement, global environment information of the device, and the like that correspond to the service type of the first service data, to select a proper communication module.

Table 5 is a group of schematic diagrams of a selection rule for a control module to select a communication module.

**Table 5**

| Device to which a rule applies | Service requirement | Scenario requirement | Communication distance requirement | Performance Requirement | Optional communication module |
|---|---|---|---|---|---|
| Mobile phone | Positioning | - | - | - | BT AoA/HADM, Wi-Fi FTM, UWB, and GPS |
| | | E1 is indoor | - | Low precision/high precision | BT AoA/HADM and Wi-Fi FTM |
| | | E1 is outdoor | - | - | GPS |
| | | E1 is outdoor | | High precision | GNSS module |
| | | E1 is indoor | | Low latency | UWB module |
| Mobile phone-wearable device (such as a TWS headset, a smart watch, a band, and the like) | Standby, hibernation, phone, music, and SMS messages (default service) | - | - | - | Bluetooth/Wi-Fi |
| | | - | Distance between devices≤ Bluetooth communication distance | - | Bluetooth/Wi-Fi |
| | | - | - | Low power consumption and high latency | Bluetooth |
| | | - | Distance between devices> Bluetooth communication distance | - | Wi-Fi |
| Mobile phone-wearable device (such as a smart watch) | Data transmission service | - | - | High rate | Wi-Fi |
| Mobile phone-router | Data transmission service | - | - | High rate | Wi-Fi |
| Smart watch-router | Data transmission service | - | - | High rate | Wi-Fi |
| | Standby/ hibernation | - | - | - | Bluetooth/Wi-Fi |
| | | Whole-house roaming | - | Low latency | Bluetooth |

In embodiments of this application, the CABA 1 may update the global environment information of the E1 based on an environment report reported by each communication module in the E1.

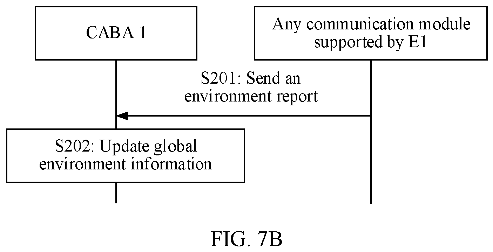

FIG. 7B is a schematic flowchart of updating global environment information according to an embodiment of this application. As shown in FIG. 7B, embodiments of this application may include the following steps.

S201: Any communication module supported by E1 sends an environment report to a CABA 1.

In an example, each environment report may include signal status information between the E1 and the another electronic apparatus detected by a communication module that sends the environment information.

S202: The CABA 1 updates global environment information.

In an example, each environment report includes transmission status information of at least one communication connection established by a communication module that sends the environment report and detected signal status information of the another electronic apparatus. In actual application, the E1 may determine, based on signal status information, information such as a distance between the E1 and another electronic apparatus, and whether the E1 is in an indoor environment or an outdoor environment.

It should be noted that step S201 may be performed for a plurality of times, and may be performed before or after any step shown in FIG. 7A. This is not limited in embodiments of this application.

Embodiments of this application provide a method for obtaining global environment information by a control module.

### Embodiment 3

After S102, embodiments of this application further provide an optional implementation, and the implementation may be applied to the E1. The CABA 1 may determine, based on the global environment information, whether a switching condition is currently met. If the switching condition is met, the CABA 1 may select, from the communication modules supported by the E1, a communication module configured to replace the COMM 11 as the communication module configured to transmit the first service data.

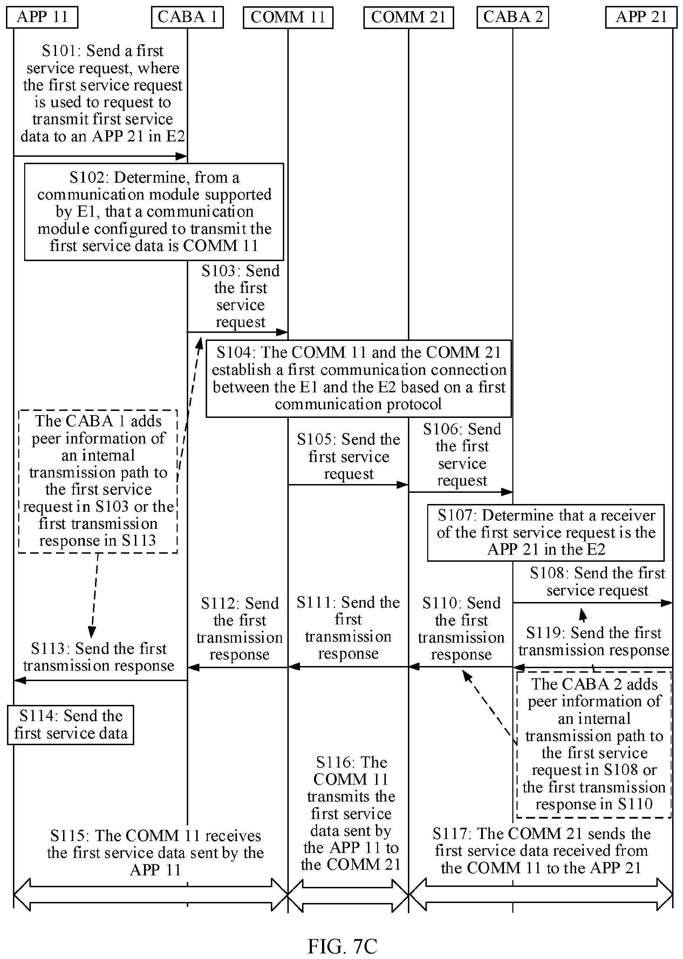

FIG. 7C is a schematic flowchart of a control method applied to scenario switching according to an embodiment of this application.

As shown in FIG. 7C, before the CABA 1 decides to switch the communication module, the method may include the following steps.

S301: An APP 11 sends first service data to E2 through COMM 11.

Then, embodiments of this application may include the following steps.

S302: When global environment information meets a switching condition, a CABA 1 determines that COMM 12 replaces the COMM 11 as a communication module configured to transmit the first service data.

S303: The CABA 1 sends a first switching indication to the COMM 12.

S304: The COMM 12 establishes a second communication connection between E1 and the E2 based on a second communication protocol.

COMM 22 and the COMM 12 may correspond to the second communication protocol.

S305: The CABA 1 reconfigures a first logical port, and sets a mapping relationship between the first logical port and a receiving port of the COMM 12.

It should be noted that the APP 11 may not perceive a reconfiguration process.

S306: An APP 11 sends first service data to E2 through COMM 12.

Before S301, embodiments of this application may further include S201-1 and S202-1, and/or may include S201-2 and S202-2.

S201-1: COMM 11 sends an environment report to a CABA 1.

S202-1: The CABA 1 updates global environment information.

S201-2: COMM 12 sends an environment report to a CABA 1.

S202-2: The CABA 1 updates global environment information.

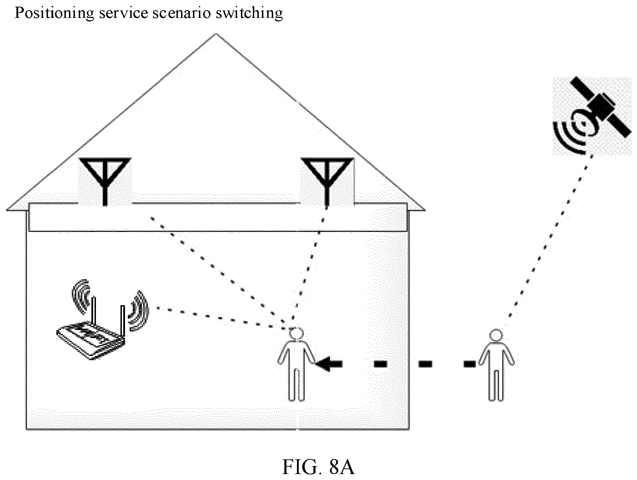

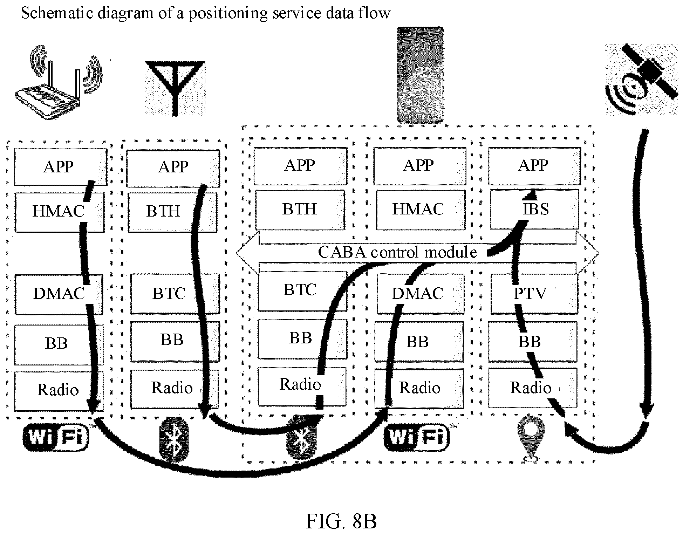

FIG. 8A is a schematic diagram of positioning service scenario switching according to an embodiment of this application. FIG. 8B is a schematic diagram of a data flow of a positioning service according to an embodiment of this application.

In an example, it is assumed that a first service request is used to request to transmit service data related to the positioning service. As shown in FIG. 8A and FIG. 8B, when an electronic apparatus carried by a user is located outdoors, a GPS module in the electronic apparatus may detect that the user is located outdoors, and the GPS module may send the service data related to the positioning service obtained based on a GPS protocol to an APP 1. When the user carries the electronic apparatus and moves indoors, a Wi-Fi module in the electronic apparatus may detect that the user is located indoors, and the Wi-Fi module may send, to the APP 1, the service data related to the positioning service obtained based on a Wi-Fi FTM protocol; and a Bluetooth module may also send, when detecting that the user is located indoors, the service data related to the positioning service obtained based on a BT AoA/HADM protocol to the APP 1. In an example, it should be noted that the E2 communicating with the E1 may also not be an electronic apparatus that supports a CABA architecture. For example, a GPS satellite.

### Embodiment 4

After S102, embodiments of this application further provide an optional implementation, and the implementation may be applied to the E1.

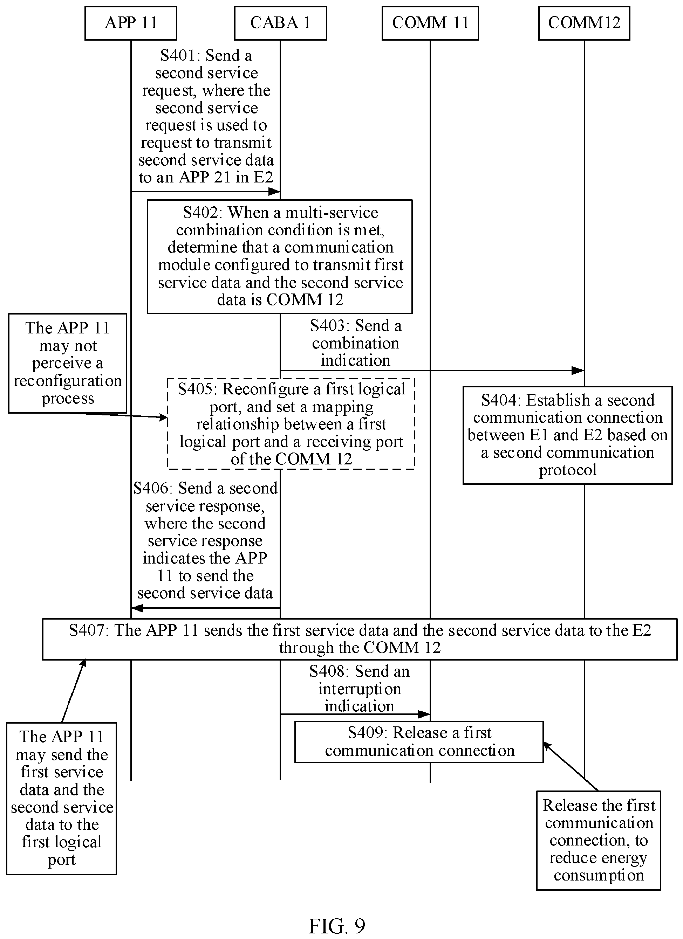

FIG. 9 is a schematic flowchart of a control method applied to a combination scenario according to an embodiment of this application. As shown in FIG. 9, steps in embodiments of this application may further include the following steps.

S401: An APP 11 sends a second service request to a CABA 1, where the second service request is used to request to transmit second service data to an APP 21 in E2.

S402: When a multi-service combination condition is met, the CABA 1 determines that a communication module configured to transmit first service data and the second service data is COMM 12.

In embodiments of this application, in an example, the multi-service combination condition may include but is not limited to the following condition: A communication module that can support transmission of both the first service data and the second service data exists in the communication module supported by E1.

In an example, if there are a plurality of communication modules that support transmission of the first service data and the second service data in the E1, the CABA 1 may select, with reference to global environment information, a communication module suitable for a current scenario from the plurality of communication modules.

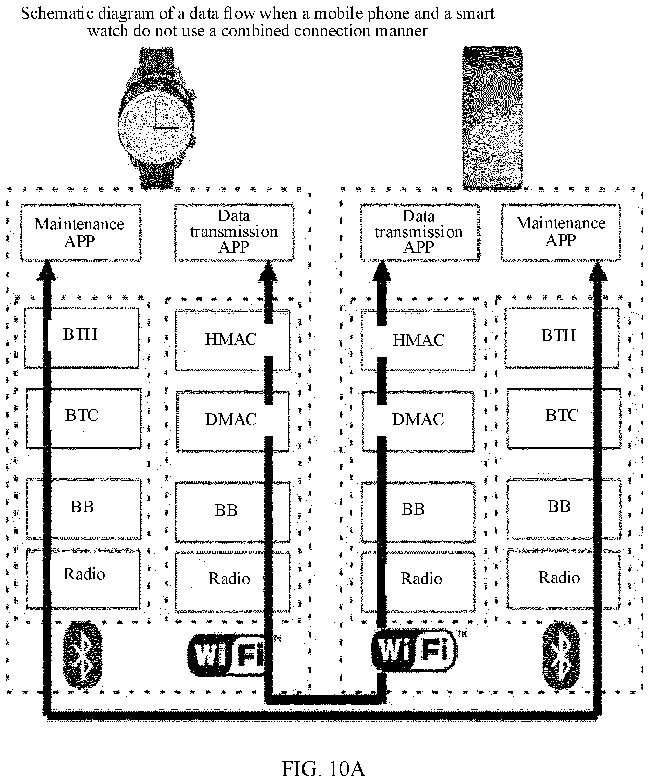

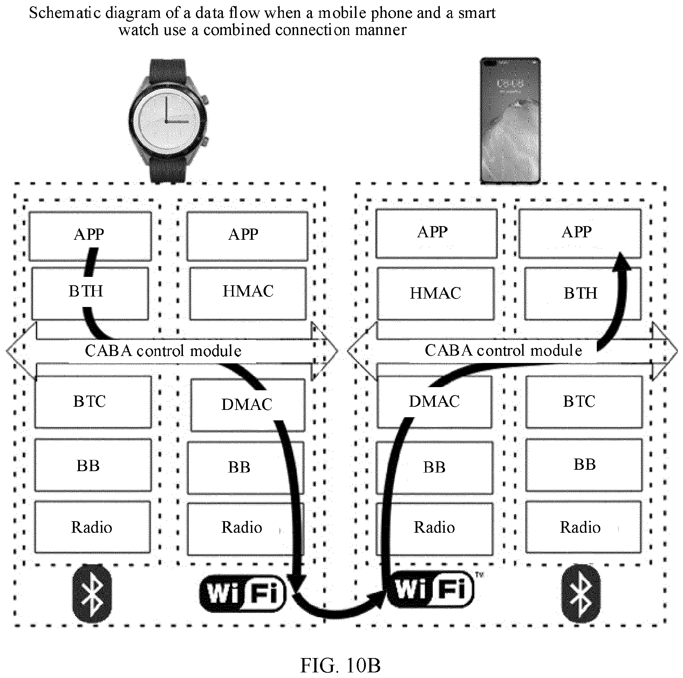

For example, the E1 may be a mobile phone, and the E2 may be a smart watch. Compared with a schematic diagram of a data flow when the mobile phone and the smart watch do not use a combined connection manner shown in FIG. 10A, refer to a schematic diagram of a data flow when the mobile phone and the smart watch use a combined connection manner shown in FIG. 10B. After the combined connection, only one bottom-layer connection may be retained.

S403: The CABA 1 sends a combination indication to the COMM 11.

The combination indication may indicate that the COMM 21 is determined as a communication module configured to transmit the first service request and the second service request.

S404: The COMM 12 establishes a second communication connection between E1 and the E2 based on a second communication protocol.

S405: The CABA 1 reconfigures a first logical port, and sets a mapping relationship between the first logical port and a receiving port of the COMM 12.

The APP 11 may not perceive the reconfiguration process.

S406: The CABA 1 sends a second service response to the APP 11, where the second service response indicates the APP 11 to send the second service data.

S407: The APP 11 sends the first service data and the second service data to the E2 through the COMM 12.

The APP 11 may send the first service data and the second service data to the first logical port.

S408: The CABA 1 sends an interruption indication to the COMM 11.

S409: The COMM 11 releases a first communication connection.

It should be noted that releasing the first communication connection may reduce energy consumption.

For details and technical effects of other technical solutions in this application, refer to descriptions in other embodiments of this application.

### Embodiment 5

Embodiments of this application further provide an optional implementation. The implementation may be applied to the relay device in the system shown in FIG. 4A and the system shown in FIG. 4B.

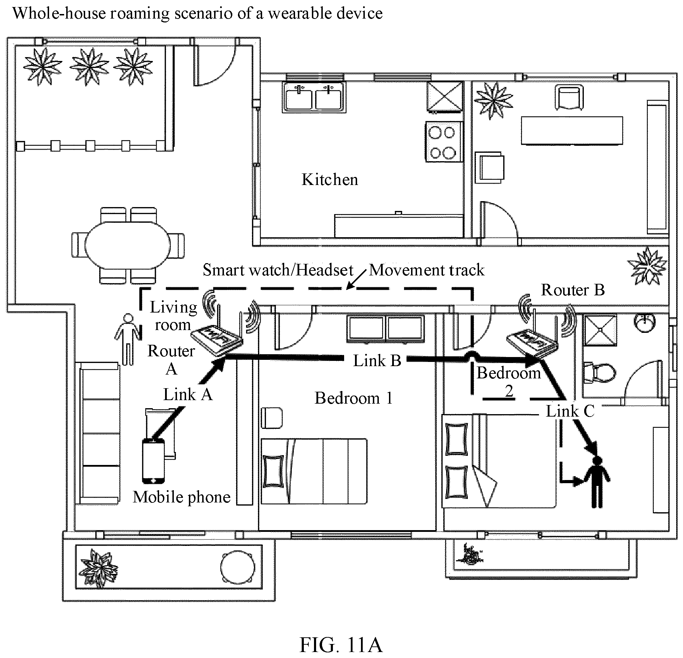

FIG. 11A is a schematic diagram of a whole-house roaming scenario of a wearable device according to an embodiment of this application.

Referring to FIG. 11A, in an example, E1 may be a mobile phone, E2 may be a Bluetooth headset or a smart watch, and E3 may be a router A. The E1 may be located in a bedroom of a user, and the user wears the E2 and moves from a living room along a movement track shown in the figure, passes by beside a bedroom 1, and finally arrives at a bedroom 2.

When the E2 and the E1 are located in the living room, a first communication connection is established between the E1 and the E2 based on a first communication protocol. In an example, the first communication protocol may be a Bluetooth protocol, and a second communication protocol may be a Wi-Fi protocol. For a process of establishing the first communication connection, refer to related descriptions in the foregoing embodiments.

In a first phase, when the E2 moves to a vicinity of the bedroom 1, a signal of the first communication connection established between the E1 and the E2 based on the Bluetooth protocol becomes worse. When a relay condition is met, the E1 and the E2 separately switch to establish a communication connection to the E3. The E1 and the E3 may establish a second communication connection based on the second communication protocol, and the E2 and the E3 may establish a third communication connection based on the first communication protocol. In a second phase, when the E2 moves to the bedroom 2, when a relay condition is met, the E2 and the E3 separately switch to establish a communication connection to the E4. The E3 and the E4 may establish a fourth communication connection based on the second communication protocol, and the E4 and the E2 may establish a fifth communication connection based on the first communication protocol. When the E2 arrives at the bedroom 2, data transmission may be performed between the E1 and the E2 through the third communication connection (a link A shown in FIG. 10A), the fourth communication connection between the E3 and the E4 (a link B shown in FIG. 10A), and the fifth communication connection between the E4 and the E2 (a link C shown in FIG. 10A).

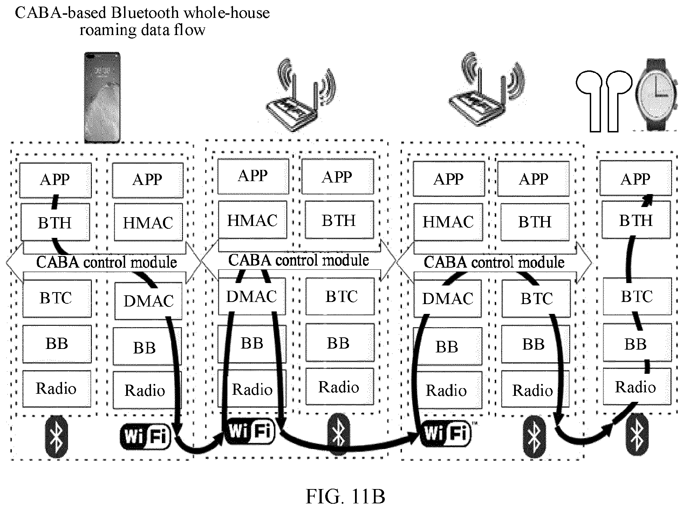

FIG. 11B is a schematic diagram of a CABA-based Bluetooth whole-house roaming data flow. In this case, a transmission path of the service data in each device may be shown in FIG. 11B.

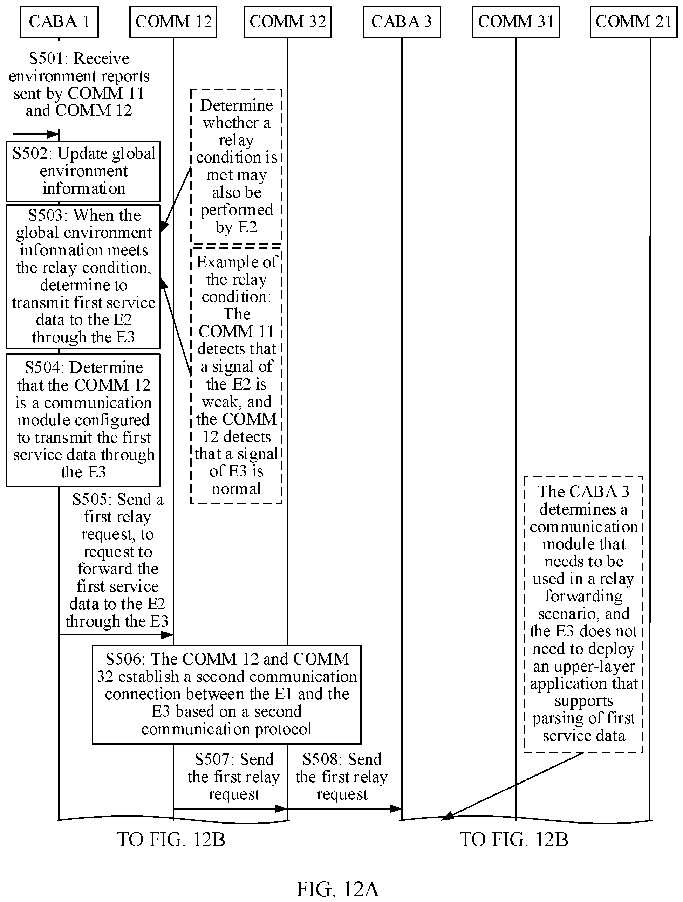

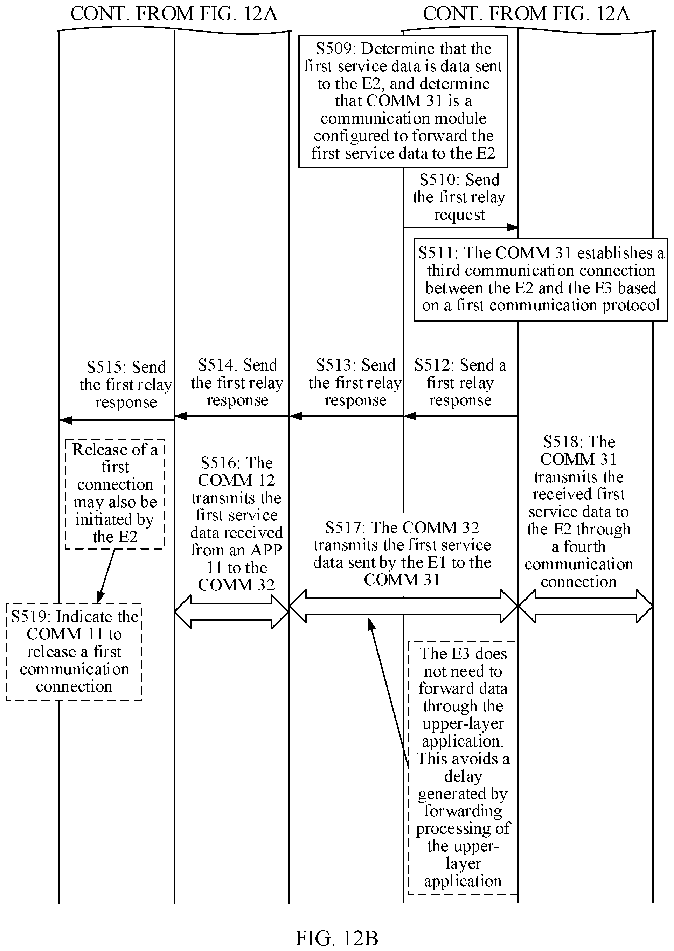

FIG. 12A and FIG. 12B are schematic flowcharts 1 of a control method applied to a relay scenario according to an embodiment of this application. The method provided in embodiments of this application may be used as an optional implementation of the first phase. As shown in FIG. 12A and FIG. 12B, embodiments of this application may include the following steps.

S501: A CABA 1 receives environment reports sent by COMM 11 and COMM 12.

S502: The CABA 1 updates global environment information.

S503: When the global environment information meets a relay condition, the CABA 1 determines to transmit first service data to E2 through E3.

In an example, the relay condition may include: The COMM 11 detects that a signal of the E2 is weak, and the COMM 12 detects that a signal of the E3 is normal.

It should be noted that the step of determining whether the relay condition is met may also be performed by the CABA 2 in the E2.

S504: The CABA 1 determines that the COMM 12 is a communication module configured to transmit the first service data through the E3.

S505: The CABA 1 sends a first relay request to the COMM 12, to request to forward the first service data to the E2 through the E3.

S506: The COMM 12 and COMM 32 establish a second communication connection between the E1 and the E3 based on a second communication protocol.

S507: The COMM 12 sends the first relay request to the COMM 32.

S508: The COMM 23 sends the first relay request to the CABA 3.

S509: CABA 3 determines that the first service data is data sent to the E2, and determines that COMM 31 is a communication module configured to forward the first service data to the E2.

S510: The CABA 3 sends the first relay request to the COMM 31.

S511: The COMM 31 establishes a third communication connection between the E2 and the E3 based on a first communication protocol.

S512: The COMM 31 sends a first relay response to the CABA 3.

S513: The CABA 3 sends a first relay response to the COMM 32.

S514: The COMM 32 sends a first relay response to the COMM 12.

S515: The COMM 12 sends a first relay response to the CABA 1.

S516: The COMM 12 transmits first service data received from an APP 11 to the COMM 32.

S517: The COMM 32 transmits the first service data sent by the E1 to the COMM 31.

S518: The COMM 31 transmits the received first service data to the E2 through a fourth communication connection.

S519: The CABA 1 indicates the COMM 11 to release a first communication connection.

In an optional implementation, the CABA 3 may add peer end information of an internal transmission path between the COMM 31 and the COMM 32 to the first relay request in S510 or the first relay response in S513. For example, a first relay port of the COMM 31 may be added to the first relay request in S510, and a second relay port of the COMM 32 may be added to the first relay response in S513.

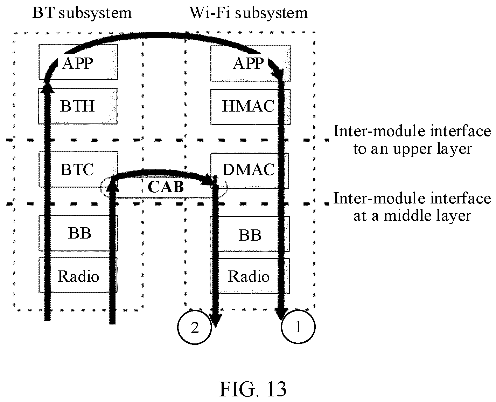

FIG. 13 is a schematic diagram of a forwarding path of a data flow in a relay device according to an embodiment of this application.

Referring to FIG. 13, a path 1 is an example of a forwarding path of a data flow when the relay device does not use a CABA architecture, and a path 2 is an example of a forwarding path of a data flow when the relay device uses the CABA architecture.

When the relay device does not use the CABA architecture, and when the relay device forwards the data flow, a communication module (BTC shown on a left side of the figure is a Bluetooth module) of a second communication protocol needs to transmit the data flow to an APP through an interface between modules at an upper layer, and then the data flow is forwarded by the APP to a communication module (a DMAC on a right side of the figure is a Wi-Fi module) of a first communication protocol. A processing delay in a forwarding process of the APP is long.

In an example, an inter-module interface at an upper layer may be an intra-chip interface or an inter-chip interface. In an example, the inter-chip interface may be a universal asynchronous receiver/transmitter (Universal Asynchronous Receiver/Transmitter, usually referred to as UART) or peripheral component interconnect express (peripheral component interconnect express, PCIE), and a processing delay is greater and processing efficiency is lower in a forwarding process of the inter-chip interface.

When the relay device uses the CABA architecture, and when the relay device forwards the data flow, the communication module of the second communication protocol only needs to forward the data flow to the communication module of the second communication protocol through an inter-module interface between intermediate layers, and does not need to pass through the inter-module interface to the upper layer. Therefore, a processing delay is small and processing efficiency is high in a forwarding process. In an example, an inter-module interface between intermediate layers may be an intra-chip interface, and the intra-chip interface may be transmitted through an intra-chip bus. Therefore, a delay is obviously small, and forwarding efficiency is high.

In addition, the CABA 3 determines a communication module that needs to be used in a relay forwarding scenario, and the E3 may not need to deploy an upper-layer application that supports parsing of the first service data. For example, a router using the CABA architecture may support some scenarios in which forwarding may be implemented only by deploying a smart gateway device of the upper-layer application.

In embodiments of this application, the relay device may also determine whether the global environment information meets the relay condition.

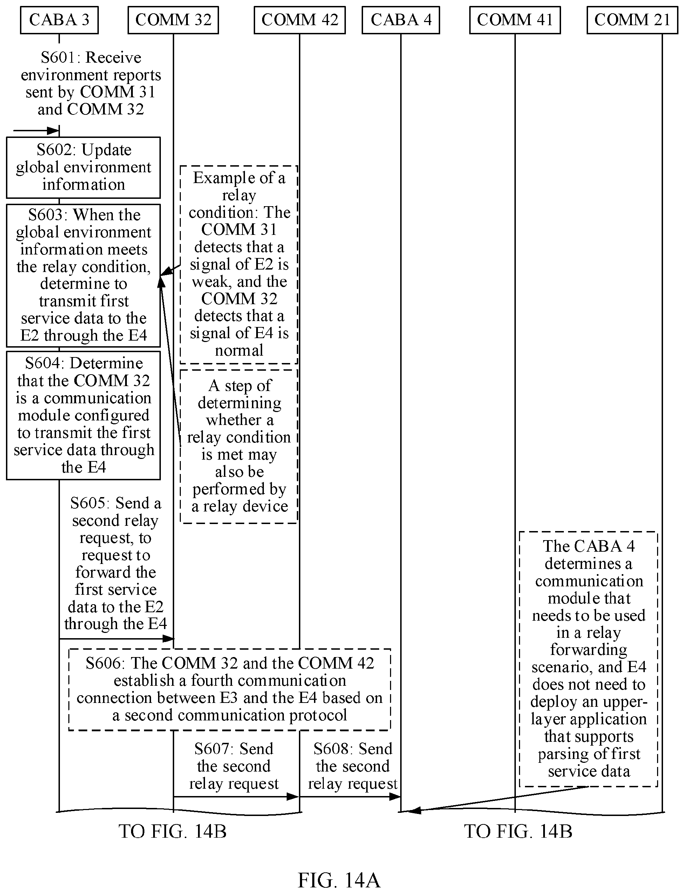

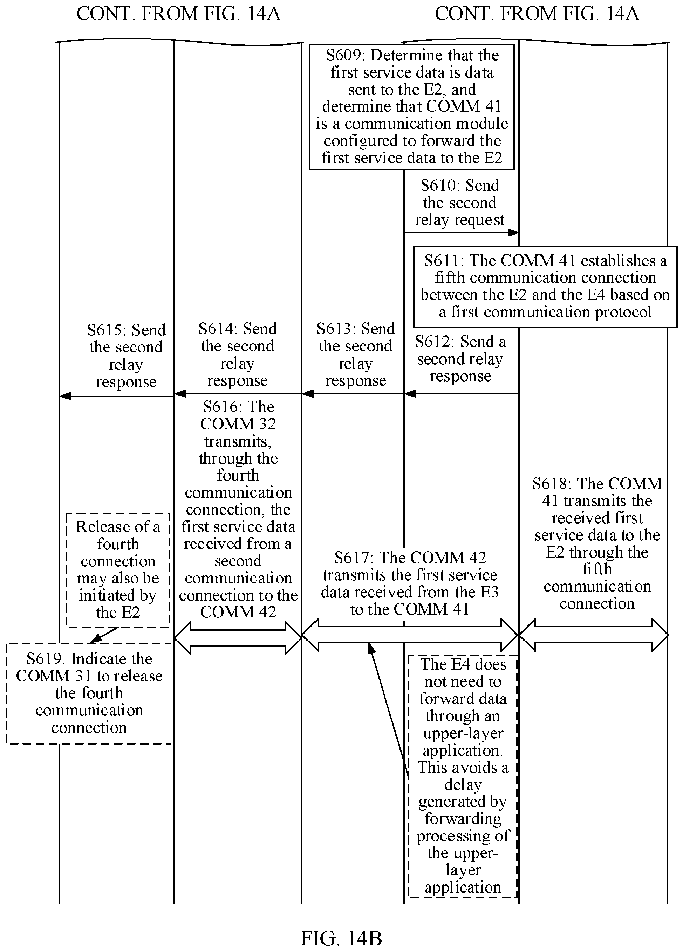

FIG. 14A and FIG. 14B are schematic flowcharts 2 of a control method applied to a relay scenario according to an embodiment of this application. The method provided in embodiments of this application may be used as an optional implementation of the second phase. As shown in FIG. 14A and FIG. 14B, embodiments of this application may include the following steps.

S601: A CABA 3 receives environment reports sent by COMM 31 and COMM 32.

S602: The CABA 3 updates global environment information.

S603: When the global environment information meets a relay condition, the CABA 3 determines to transmit first service data to E2 through E4.

In an example, the relay condition may include: The COMM 31 detects that a signal of the E2 is weak, and the COMM 32 detects that a signal of the E4 is normal.

In an example, a step of determining whether the relay condition is met may also be performed by the CABA2 in the E2.

S604: The CABA 3 determines that the COMM 32 is a communication module configured to transmit the first service data through the E4.

S605: The CABA 3 sends a second relay request to the COMM 32, to request to forward the first service data to the E2 through the E4.

S606: The COMM 32 and COMM 42 establish a fourth communication connection between the E3 and the E4 based on a second communication protocol.

S607: The COMM 32 sends a second relay request to the COMM 42.

S608: The COMM 42 sends a second relay request to the CABA 4.

S609: A CABA 4 determines, from the COMM 42, that the first service data is data sent to the E2, and determines that COMM 41 is a communication module configured to forward the first service data to the E2.

It should be noted that when the CABA 4 determines a communication module that needs to be used in a relay forwarding scenario, the E4 may not need to deploy an upper-layer application that supports parsing of the first service data.

S610: The CABA 4 sends a second relay request to the COMM 41.

S611: The COMM 41 and COMM 21 establish a fifth communication connection between the E2 and the E4 based on a first communication protocol.

S612: The COMM 41 sends a second relay response to the CABA 4.

S613: The CABA 4 sends a second relay response to the COMM 42.

S614: The COMM 42 sends a second relay response to the COMM 32.

S615: The COMM 32 sends a second relay response to the CABA 3.

S616: The COMM 32 transmits, through the fourth communication connection, the first service data received from the second communication connection to the COMM 42.

S617: The COMM 42 transmits the first service data received from the E3 to the COMM 41.

It should be noted that the E4 does not need to forward data through the upper-layer application. This avoids a delay generated by forwarding processing of the upper-layer application.

S618: The COMM 41 transmits the received first service data to the E2 through the fifth communication connection.

S619: The CABA 3 indicates the COMM 31 to release a fourth communication connection.

It should be noted that the release of the fourth connection may also be initiated by the E2.

As shown in FIG. 11B, by using the technical solution in embodiments of this application, a forwarding path of a data flow may include: mobile phone APP->BTH->CABA->Wi-Fi DMAC->Wi-Fi Radio->router A Radio->CABA->Radio->router B Wi-Fi Radio->CABA->BTC->BT Radio->headset Radio->BTC->BTH->APP. In other words, except a start (mobile phone) node and an end (headset) node, all data flows of "asynchronous communication systems" are determined at the CABA layer for data flow distribution, and do not need to be transferred to an upper layer. Therefore, a delay may be reduced, and a low-delay requirement of a service of a wearable device may be met.

For other technical details and technical effects of embodiments of this application, refer to descriptions in other embodiments of this application.

The technical solutions provided in embodiments of this application may bring many technical effects.

First, the control module selects, based on real-time, accurate, and comprehensive global environment information, a more proper wireless communication module or physical layer channel, to complete a service requirement. The comprehensively selected wireless communication number or physical layer channel has low power consumption, good transmission performance (for example, actual transmission and positioning precision), and a low delay.

Second, because data forwarding and distribution may not need to wake up an application layer APP or a main processor AP, power consumption in a data transmission process is lower.

Third, because seamless switching is performed on a bottom layer, to be specific, switching does not need to be performed on the application layer, a complex procedure of the application layer is avoided, and a switching delay in a data forwarding process is low.

Fourth, because application layer determining and distribution do not need to be performed on the relay device in a data forwarding process, for example, an internal bus, a board-level interface, and multi-process at an application layer do not need to be scheduled by an operating system between, a forwarding process may achieve a very small transmission delay. For example, the application layer and the physical layer may be two chips. If a non-CABA solution is used, processing needs to be performed on the other chip through board-level interconnection. After the CABA is used, the data does not need to be forwarded through the board-level interconnection.

Fifth, the CABA control module provides a unified application/IP layer interface for the bottom-layer communication module, and resources occupied when the control module sets the control policy and performs data flow management are significantly reduced. This avoids a problem that the bottom-layer communication module is indicated to repeatedly collect statistics when the application layer sets a control policy and performs data flow management, which causes repeated resource allocation, repeated calculation, and determining.

Sixth, the application may be decoupled in a communication manner. The application layer may be only responsible for sending the service requirement/data to the CABA control module, and does not need to pay attention to which wireless module is specifically configured to implement the function.

Seventh, the data flow may be invisible to the application. For the relay device, the CABA may complete direct interaction and forwarding of a data path at an IP layer or a MAC layer, and does not need to wake up the application layer to participate in determining and data forwarding.

Eighth, the CABA control module makes a decision. For a service requirement delivered by the application, the CABA dynamically and adaptively selects an optimal bottom-layer communication module, and a specific application does not need to participate in determining.

Ninth, compared with an architecture in which a plurality of wireless communication modules are disposed in a same device and are separately mounted on a bus in the non-CABA solution, to provide a service for an application, the CABA control module (Controller) normalizes an interface from the MAC layer (thickened physical layer) to the application layer, and is mounted on the system bus as one unified module. Based on this, the application may be only responsible for delivering a service requirement, and the application may be invisible to each module of the CABA Controller for service execution, data distribution and forwarding, selection of a specific wireless communication module, a direction of a data flow, and the like.

Tenth, in actual application, through a feature that an existing router may cover a communication range of a home scenario, and through features such as a low delay, low power consumption, and fast switching of the CABA, a service that may be provided is extended from an original Wi-Fi network access to a continuous service for all mobile phones and wearable devices. In this way, a service scope of the router is not only internet access, but also data forwarding of services such as phone, local music, and a message notification.

### Embodiment 6

Embodiments of this application further provide a communication apparatus. In embodiments of this application, the control apparatus may alternatively be a control circuit. The control apparatus or the control circuit may be configured to implement steps related to a control module, a CABA control module, and a CABA control circuit in the foregoing embodiments.

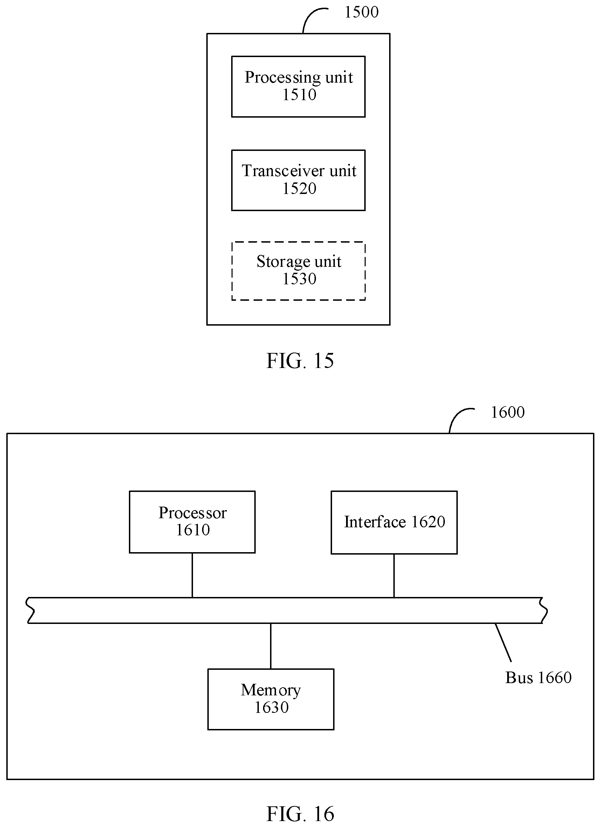

FIG. 15 is a schematic block diagram of a control apparatus according to an embodiment of this application.

As shown in FIG. 15, the control apparatus 1500 in embodiments of this application may include a transceiver unit 1510 and a processing unit 1520. In an optional implementation, the control apparatus may further include a storage unit 1530.

In a first optional implementation, the control apparatus may be applied to a first electronic apparatus, where
a transceiver unit is configured to obtain first service data;
a processing unit is configured to selectively distribute the first service data to at least one of at least two communication circuits, where any one of the at least two communication circuits supports one wireless communication protocol.

In a possible implementation, the at least two communication circuits support different wireless communication protocols.

In a possible implementation, the electronic apparatus further includes: an application processor; the application processor is configured to generate the first service data;
the control apparatus may be a bus; and the application processor and the at least two communication circuits are separately connected to the bus.

In a possible implementation, the electronic apparatus includes: an application processor; the control circuit is a circuit integrated in the application processor:
the application processor further includes: an application circuit, where the application circuit is configured to generate the first service data; and
the transceiver unit is configured to obtain the first service data from the application circuit.

In a possible implementation, the electronic apparatus includes: at least one communication chip;
each of the at least two communication circuits is a circuit in the at least one communication chip; and
each of the at least one communication chip includes at least one of the at least two communication circuits.

In a possible implementation, the electronic apparatus is a communication chip; and
the control circuit and the at least two communication circuits are circuits integrated in the communication chip.

In a possible implementation, the wireless communication protocols supported by the at least two communication circuits include at least two of the following:
a Bluetooth protocol, a Wi-Fi protocol, an ultra wide band UWB protocol, a global navigation satellite system GNSS protocol, a ZigBee Zigbee protocol, a near field communication NFC protocol, a home Internet of Things communication protocol technology Thread protocol, or an infrared protocol.

In a possible implementation, each of the at least two communication circuits includes: a media access control MAC unit corresponding to a wireless communication protocol supported by each communication circuit or a MAC layer processing unit corresponding to a wireless communication protocol supported by each communication circuit.

Communication circuits corresponding to different wireless communication protocols may include any one of a MAC unit and a MAC layer processing unit.

In a possible implementation, a MAC module corresponding to the Bluetooth protocol includes: a Bluetooth host BTH and Bluetooth control BTC; a MAC unit corresponding to the Wi-Fi protocol is Wi-Fi media access control WMAC; a MAC unit corresponding to each of the UWB protocol, the Zigbee protocol, the NFC protocol, the Thread protocol, and the infrared protocol is universal operation and automation controller media access control UMAC; and a MAC unit corresponding to the GNSS protocol is position velocity temperature PVT.

In a possible implementation, a MAC layer processing unit corresponding to the Bluetooth protocol includes: the BTC; a MAC layer processing unit corresponding to the Wi-Fi protocol is device media access control DMAC; a MAC layer processing unit corresponding to each of the UWB protocol, the Zigbee protocol, the NFC protocol, the Thread protocol, and the infrared protocol is the DMAC; and a MAC layer processing unit corresponding to the GNSS protocol is the position velocity temperature PVT.

In a possible implementation, the application processor includes a circuit configured to implement a logical function of at least one of the following modules: an application module, a high-layer transmission protocol module, and a host module corresponding to at least one wireless communication protocol; a host module corresponding to the Bluetooth protocol includes: the Bluetooth host BTH; a host module corresponding to the Wi-Fi protocol is the WMAC; a host module corresponding to each of the UWB protocol, the ZigBee protocol, the NFC protocol, the Thread protocol, and the infrared protocol is the HMAC; and a host module corresponding to the GNSS protocol is a location based service LBS.

In a possible implementation, the control circuit is specifically configured to screen the at least two communication circuits, and determine that a first communication circuit is a communication circuit configured to transmit the first service data to a second electronic apparatus E2; and is configured to indicate the first communication circuit to transmit the first service data to the second electronic apparatus E2.

In a possible implementation, the control circuit is further configured to: obtain second service data, and when the first service data and the second service data meet a combination transmission condition, determine that a second communication circuit is a communication circuit configured to transmit the first service data and the second service data; and indicate the second communication circuit to transmit the first service data and the second service data.

In a possible implementation, the first communication circuit is configured to: after the control circuit indicates the first communication circuit to transmit the first service data, establish, based on a first communication protocol supported by the first communication circuit, a first communication connection used to transmit the first service data; and is configured to release the first communication link when the control circuit indicates the second communication circuit to transmit the first service data and the second service data.

In a possible implementation, the control circuit is further configured to obtain the first service data from a second communication circuit of the at least two communication circuits; is further configured to determine, from the at least two communication circuits, that a first communication circuit is a communication circuit configured to transmit the first service data to a second electronic apparatus E2; and is further configured to indicate the first communication circuit to transmit the first service data to the E2.

In a second optional implementation, the control apparatus may be applied to a first electronic apparatus, where
a transceiver unit may be configured to receive a first transmission request sent by an application in the E1, where the first transmission request is used to request to transmit first service data to a second electronic apparatus E2;
a processing unit may be configured to screen at least two communication modules supported by the E1, and determine that a first communication module is a communication module configured to transmit the first service data; and
the transceiver unit may be further configured to send the first transmission request to the first communication module, where the at least two communication modules correspond to different communication protocols.

In a possible implementation, when the first transmission request is a first service request sent by an application in the E1, the E1 is a mobile phone, and the E2 is a wearable device; or the E1 is a wearable device, and the E2 is a mobile phone.

In a possible implementation, the transceiver unit may be further configured to: after the receiving the first service request sent by the application in the E1, receive a second service request sent by the application, where the second service request is used to request to transmit second service data to the E2;
the processing unit may be further configured to: when the first service data and the second service data meet a combination condition, determine that a second communication module is a communication module configured to transmit the first service data and the second service data; and
the transceiver unit may be further configured to send a combination indication to the second communication module, where the combination indication indicates the second communication module to transmit the first service data and the second service data to the E2; and
the combination condition includes: The first service data and the second service data are allowed to use a communication module with a same communication protocol.

In a possible implementation, the application includes a first application and a second application; and the first service request is sent by the first application, and the second service is sent by the second application.

In a possible implementation of the fourth aspect, the first communication module is configured to: after the first service request is received, establish a first communication connection between the E1 and the E2, and transmit the first service data to the E2 based on the first communication connection; the second communication module may be further configured to: after the combination indication is received, establish a second communication connection between the E1 and the E2, and transmit the first service data and the second service data to the E2 based on the second communication connection; and
the transceiver unit may be further configured to send a release indication to the first communication module, where the release indication indicates the first communication module to release the first communication connection.

In a possible implementation, the combination condition may include: The electronic apparatus receiving the first service data and the electronic apparatus receiving the second service data are the same.

In a possible implementation, the combination condition further includes: a performance indicator of transmitting the first service data by using the second communication module is less than a performance indicator of transmitting the first service data by using the first communication module, where the performance indicator includes at least one of the following: power consumption, a delay, and a bit error rate.

In a possible implementation, the processing unit may be further configured to: determine, when global environment information of the E1 meets a switching condition, that a second communication module is a communication module configured to transmit the first service data; and
the transceiver unit may be further configured to send a switching indication to the second communication module, where the switching indication indicates the second communication module to transmit the first service data to the E2.

In a possible implementation, the processing unit may be further configured to determine to forward the first service data to the E2 through a third electronic apparatus E3 when global environment information of the E1 meets a relay condition; and screen at least two communication modules supported by the E1, and determine that a second communication module is a communication module configured to forward the first service data to the E2 through the E3; and
the transceiver unit may be further configured to send a relay indication to the second communication module, where the relay indication indicates the second communication module to forward the first service data to the E2 through the E3.

In a possible implementation, the relay condition includes: The E1 detects the E3, and/or the E2 detects the E3.

In a possible implementation, the transceiver unit may be further configured to: after establishing the first communication connection, receive, through the first communication module, the environment report sent by the E2, where the environment report may include signal status information of another electronic apparatus detected by the E2. In a possible implementation, the transceiver unit may further send, through the first communication module, the environment report to the E2, where the environment report may include the signal status information of the another electronic apparatus detected by the E1.

In a possible implementation, the processing unit may be specifically configured to screen the at least two communication modules based on the global environment information of the E1, where the global environment information includes signal status information between the E1 and another electronic apparatus detected by the at least two communication modules.

In a possible implementation, the transceiver unit may be specifically configured to receive environment reports sent by the at least two communication modules, where each environment report includes signal status information between the E1 and the another electronic apparatus detected by a communication module that sends the environment information; and the transceiver unit may be specifically configured to update the global environment information of the E1 based on the environment reports sent by the at least two communication modules.

In a third optional implementation, the control apparatus may be applied to the second electronic apparatus E2, where
a transceiver unit may be configured to receive a first service request received by a first communication module in the E2 from a first electronic apparatus E1, where the first service request is used to request to transmit first service data to an application on the E2; and
a processing unit may be configured to send the first service request to the application when it is determined that a receiving end of the first service request is an application in the E2.

In a possible implementation of a third optional implementation, the method further includes:
the transceiver unit, further configured to receive a second service request sent by the application, where the second transmission request is used to request to transmit second service data to the E1;
the processing unit, further configured to: when the first service data and the second service data meet a combination condition, determine that a second communication module in the E2 is a communication module configured to transmit the first service data and the second service data; and
the transceiver unit, further configured to send a combination indication to the second communication module, where the combination indication indicates the second communication module to transmit the first service data and the second service data to the E2; and
the combination condition includes: The first service data and the second service data are allowed to use a communication module with a same communication protocol.

In a possible implementation of a third optional implementation, the first communication module is configured to transmit the first service data through a first communication connection between the E1 and the E2; the second communication module is further configured to: after the combination indication is received, establish a second communication connection between the E1 and the E2, and transmit the first service data and the second service data to the E2 based on the second communication connection; and
the transceiver unit is further configured to send a release indication to the first communication module, where the release indication indicates the first communication module to release the first communication connection.

In a possible implementation of a third optional implementation, the method further includes:
the processing unit, further configured to determine that a second communication module in the E2 is a communication module configured to transmit the first service data when global environment information of the E2 meets a switching condition; and
the transceiver unit, further configured to send a switching indication to the second communication module, where the switching indication indicates the second communication module to transmit the first service data to the E2.

In a possible implementation of a third optional implementation, the method further includes:
the processing unit, further configured to determine to forward the first service data to the E1 through a third electronic apparatus E3 when global environment information of the E2 meets a relay condition;
the processing unit, further configured to screen at least two communication modules supported by the E2, and determine that a second communication module in the E2 is a communication module configured to forward the first service data to the E1 through the E3; and
the transceiver unit, further configured to send a relay indication to the second communication module, where the relay indication indicates the second communication module to forward the first service data to the E1 through the E3.

In a possible implementation of a third optional implementation, the method further includes:
the transceiver unit, further configured to receive environment reports sent by the at least two communication modules supported by the E2, where each environment report includes signal status information between the E2 and the another electronic apparatus detected by a communication module that sends the environment information; and
the processing unit, further configured to update the global environment information of the E2 based on the environment reports sent by the at least two communication modules.

In a fourth optional implementation, the control apparatus may be applied to the third electronic apparatus E3, where
a transceiver unit may be configured to receive a first relay request sent by a first communication module in the E3, where the first relay request is used to request to transmit first service data to a target application in a second electronic apparatus E2;
a processing unit is configured to screen at least two communication modules supported by the E3, and determine that a second communication module is a communication module configured to transmit the first service data; and
a transceiver unit is configured to send a relay indication to the second communication module, where the at least two communication modules correspond to different communication protocols; and the E3 does not include the target application, or the E3 does not forward the first relay request or the first service data to the target application in the E3.

FIG. 16 is another schematic block diagram of a control apparatus according to an embodiment of this application.

As shown in FIG. 16, a control apparatus 1600 is provided, including a processor 1610 and a transceiver 1620. The memory is configured to store instructions, and the processor is configured to execute the instructions to implement the method in any one of the foregoing embodiments.

In a possible implementation, the apparatus may further include a memory 1630. The apparatus may further include a system bus 1660, configured to connect components in the apparatus.

In a possible implementation, the apparatus may be an electronic apparatus, or may be a chip in an electronic apparatus.

When the apparatus is an electronic apparatus, the processor may be configured to implement a function of the processing unit in the foregoing embodiments, and the transceiver may be configured to implement a function of the transceiver unit in the foregoing embodiments; and the memory may be configured to implement a function of the storage unit in the foregoing embodiments.

When the apparatus is the chip in the electronic apparatus, the transceiver may be an input/output interface, a pin, a circuit, or the like; and may be configured to implement a function of the transceiver unit in the foregoing embodiments. The memory may be a storage module (for example, a register, a cache, or the like) in the chip, or may be a storage module (for example, a read-only memory, a random access memory, or the like) outside the chip, and may be configured to implement a function of the storage unit in the foregoing embodiments.

The processor mentioned anywhere above may be a general purpose central processing unit (Central Processing Unit, CPU for short), a microprocessor, an application-specific integrated circuit (application-specific integrated circuit, ASIC for short), or one or more integrated circuits configured to control program execution of the spatial multiplexing methods in the foregoing aspects.

Embodiments of this application further provide an electronic apparatus, including at least two communication modules and a control module. The at least two communication modules support different communication protocols. The control module is configured to perform the method in any one of the foregoing embodiments.

In a possible implementation, the apparatus further includes an application, where the application is configured to send a first service request to the control module.

In a possible implementation, the electronic apparatus is a router.

In a possible implementation, the electronic apparatus is a mobile phone or a wearable device.

According to another aspect, this application provides a computer-readable storage medium. The computer-readable storage medium stores instructions, and the instructions may be executed by one or more processors on a processing circuit. When the instructions are run on a computer, the computer is enabled to perform the method in the first aspect or any possible implementation of the first aspect.

According to another aspect, a computer program product including instructions is provided. When the computer program product runs on a computer, the computer is enabled to perform the method according to the first aspect or any possible implementation of the first aspect.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid-State Disk), or the like.

## Claims

1. An electronic apparatus (E1), comprising: a control circuit and at least two communication circuits, wherein
the control circuit is configured to: obtain first service data, and selectively distribute the first service data to at least one of the at least two communication circuits, and any one of the at least two communication circuits supports one wireless communication protocol,
wherein the electronic apparatus (E1) further comprises an application processor configured to generate the first service data;
the control circuit is a bus; and the application processor and the at least two communication circuits are separately connected to the bus,
wherein the control circuit is specifically configured to screen the at least two communication circuits, and determine that a first communication circuit is a communication circuit configured to transmit the first service data to a further electronic apparatus (E2); and is configured to indicate the first communication circuit to transmit the first service data to the further electronic apparatus (E2).

2. The electronic apparatus (E1) according to claim 1, wherein the at least two communication circuits support different wireless communication protocols.

3. The electronic apparatus (E1) according to claim 1 or 2, wherein the electronic apparatus (E1) comprises: at least one communication chip;
each of the at least two communication circuits is a circuit in the at least one communication chip; and
each of the at least one communication chip comprises at least one of the at least two communication circuits.

4. The electronic apparatus (E1) according to any one of claims 1 to 3, wherein the wireless communication protocols supported by the at least two communication circuits comprise at least two of the following:
a Bluetooth protocol, a Wi-Fi protocol, an ultra wide band, UWB, protocol, a global navigation satellite system, GNSS, protocol, a ZigBee protocol, a near field communication, NFC, protocol, a home Internet of Things communication protocol technology Thread protocol, or an infrared protocol.

5. The electronic apparatus (E1) according to any one of claims 1 to 4, wherein each of the at least two communication circuits comprises: a media access control, MAC, unit corresponding to a wireless communication protocol supported by each communication circuit or a MAC layer processing unit corresponding to a wireless communication protocol supported by each communication circuit.

6. The electronic apparatus (E1) according to any one of claims 1 to 5, wherein
the control circuit is further configured to: obtain second service data, and when the first service data and the second service data meet a combination transmission condition, determine that a second communication circuit is a communication circuit configured to transmit the first service data and the second service data; and is configured to indicate the second communication circuit to transmit the first service data and the second service data.

7. The apparatus (E1) according to claim 6, wherein
the first communication circuit is configured to: after the control circuit indicates the first communication circuit to transmit the first service data, establish, based on a first communication protocol supported by the first communication circuit, a first communication connection used to transmit the first service data; and is configured to release the first communication link when the control circuit indicates the second communication circuit to transmit the first service data and the second service data.

8. A transmission control method, applied to a control circuit in a first electronic apparatus (E1), wherein the method comprises:
obtaining first service data; and
selectively distributing the first service data to at least one of at least two communication circuits in the first electronic apparatus (E1),
wherein any one of the at least two communication circuits supports at least one wireless communication protocol,
wherein the first electronic apparatus (E1) further comprises an application processor configured to generate the first service data; the control circuit is a bus; and the application processor and the at least two communication circuits are separately connected to the bus,
wherein the method comprises
screening the at least two communication circuits, and determining that a first communication circuit is a communication circuit configured to transmit the first service data to a second electronic apparatus (E2); and
indicating the first communication circuit to transmit the first service data to the second electronic apparatus (E2).

9. A computer program product comprising instructions which, when the program is executed by a computer, cause the computer to carry out the method of claim 8.

10. A computer-readable storage medium comprising instructions which, when executed by a computer, cause the computer to carry out the method of claim 8.

## Patentansprüche

1. Elektronische Vorrichtung (E1), umfassend: eine Steuerschaltung und mindestens zwei Kommunikationsschaltungen, wobei
die Steuerschaltung zu Folgendem konfiguriert ist: Erhalten erster Dienstdaten und selektives Verteilen der ersten Dienstdaten an mindestens eine der mindestens zwei Kommunikationsschaltungen und wobei eine der mindestens zwei Kommunikationsschaltungen ein drahtloses Kommunikationsprotokoll unterstützt,
wobei die elektronische Vorrichtung (E1) ferner einen Anwendungsprozessor umfasst, der dazu konfiguriert ist, die ersten Dienstdaten zu erzeugen;
die Steuerschaltung ein Bus ist; und der Anwendungsprozessor und die mindestens zwei Kommunikationsschaltungen separat mit dem Bus verbunden sind,
wobei die Steuerschaltung speziell dazu konfiguriert ist, die mindestens zwei Kommunikationsschaltungen zu prüfen und zu bestimmen, dass eine erste Kommunikationsschaltung eine Kommunikationsschaltung ist, die dazu konfiguriert ist, die ersten Dienstdaten an eine weitere elektronische Vorrichtung (E2) zu übertragen; und dazu konfiguriert ist, die erste Kommunikationsschaltung anzuweisen, die ersten Dienstdaten an die weitere elektronische Vorrichtung (E2) zu übertragen.

2. Elektronische Vorrichtung (E1) nach Anspruch 1, wobei die mindestens zwei Kommunikationsschaltungen unterschiedliche drahtlose Kommunikationsprotokolle unterstützen.

3. Elektronische Vorrichtung (E1) nach Anspruch 1 oder 2, wobei die elektronische Vorrichtung (E1) Folgendes umfasst:
mindestens einen Kommunikationschip;
wobei jede der mindestens zwei Kommunikationsschaltungen eine Schaltung in dem mindestens einen Kommunikationschip ist; und
jeder des mindestens einen Kommunikationschips mindestens eine der mindestens zwei Kommunikationsschaltungen umfasst.

4. Elektronische Vorrichtung (E1) nach einem der Ansprüche 1 bis 3, wobei die von den mindestens zwei Kommunikationsschaltungen unterstützten drahtlosen Kommunikationsprotokolle mindestens zwei der Folgenden umfassen:
ein Bluetooth-Protokoll, ein Wi-Fi-Protokoll, ein Ultrabreitband-(ultra wide band, UWB-)Protokoll, ein globales Navigationssatellitensystem-(global navigation satellite system, GNSS-) Protokoll, ein ZigBee-Protokoll, ein Nahfeldkommunikation-(near field communication, NFC-)Protokoll, ein Thread-Protokoll für eine Kommunikationsprotokolltechnik für das Internet der Dinge in Haushalten oder ein Infrarot-Protokoll.

5. Elektronische Vorrichtung (E1) nach einem der Ansprüche 1 bis 4, wobei jede der mindestens zwei Kommunikationsschaltungen Folgendes umfasst: eine Medienzugriffssteuerungs-(media access control, MAC-)Einheit, die einem von jeder Kommunikationsschaltung unterstützten drahtlosen Kommunikationsprotokoll entspricht, oder eine MAC-Schicht-Verarbeitungseinheit, die einem von jeder Kommunikationsschaltung unterstützten drahtlosen Kommunikationsprotokoll entspricht.

6. Elektronische Vorrichtung (E1) nach einem der Ansprüche 1 bis 5, wobei
die Steuerschaltung ferner zu Folgendem konfiguriert ist: Erhalten zweiter Dienstdaten und, wenn die ersten Dienstdaten und die zweiten Dienstdaten eine Kombinationsübertragungsbedingung erfüllen, Bestimmen, dass eine zweite Kommunikationsschaltung eine Kommunikationsschaltung ist, die dazu konfiguriert ist, die ersten Dienstdaten und die zweiten Dienstdaten zu übertragen; und dazu konfiguriert ist, die zweite Kommunikationsschaltung anzuweisen, die ersten Dienstdaten und die zweiten Dienstdaten zu übertragen.

7. Vorrichtung (E1) nach Anspruch 6, wobei
die erste Kommunikationsschaltung zu Folgendem konfiguriert ist: nachdem die Steuerschaltung die erste Kommunikationsschaltung anweist, die ersten Dienstdaten zu übertragen, auf einem von der ersten Kommunikationsschaltung unterstützten ersten Kommunikationsprotokoll basierendes Aufbauen einer ersten Kommunikationsverbindung, die verwendet wird, um die ersten Dienstdaten zu übertragen; und dazu konfiguriert ist, den ersten Kommunikationslink freizugeben, wenn die Steuerschaltung die zweite Kommunikationsschaltung anweist, die ersten Dienstdaten und die zweiten Dienstdaten zu übertragen.

8. Übertragungssteuerungsverfahren, das auf eine Steuerschaltung in einer ersten elektronischen Vorrichtung (E1) angewendet wird, wobei das Verfahren Folgendes umfasst:
Erhalten erster Dienstdaten; und
selektives Verteilen der ersten Dienstdaten an mindestens eine von mindestens zwei Kommunikationsschaltungen in der ersten elektronischen Vorrichtung (E1),
wobei eine der mindestens zwei Kommunikationsschaltungen mindestens ein drahtloses Kommunikationsprotokoll unterstützt,
wobei die erste elektronische Vorrichtung (E1) ferner einen Anwendungsprozessor umfasst, der dazu konfiguriert ist, die ersten Dienstdaten zu erzeugen; die Steuerschaltung ein Bus ist;
und der Anwendungsprozessor und die mindestens zwei Kommunikationsschaltungen separat mit dem Bus verbunden sind, wobei das Verfahren Folgendes umfasst
Prüfen der mindestens zwei Kommunikationsschaltungen und Bestimmen, dass eine erste Kommunikationsschaltung eine Kommunikationsschaltung ist, die dazu konfiguriert ist, die ersten Dienstdaten an eine zweite elektronische Vorrichtung (E2) zu übertragen; und
Anweisen der ersten Kommunikationsschaltung, die ersten Dienstdaten an die zweite elektronische Vorrichtung (E2) zu übertragen.

9. Computerprogrammprodukt, umfassend Anweisungen, die, wenn das Programm von einem Computer ausgeführt wird, den Computer dazu veranlassen, das Verfahren nach Anspruch 8 durchzuführen.

10. Computerlesbares Speichermedium, umfassend Anweisungen, die, wenn sie von einem Computer ausgeführt werden, den Computer dazu veranlassen, das Verfahren nach Anspruch 8 durchzuführen.

## Revendications

1. Appareil électronique (E1), comprenant : un circuit de commande et au moins deux circuits de communication, dans lequel le circuit de commande est configuré pour : obtenir des premières données de service et distribuer sélectivement les premières données de service à au moins l'un des au moins deux circuits de communication, et un quelconque des au moins deux circuits de communication prend en charge un protocole de communication sans fil,
dans lequel l'appareil électronique (E1) comprend en outre un processeur d'application configuré pour générer les premières données de service ;
le circuit de commande est un bus ; et le processeur d'application et les au moins deux circuits de communication sont reliés séparément au bus,
dans lequel le circuit de commande est spécifiquement configuré pour examiner les au moins deux circuits de communication et déterminer qu'un premier circuit de communication est un circuit de communication configuré pour transmettre les premières données de service à un autre appareil électronique (E2) ; et est configuré pour indiquer que le premier circuit de communication doit transmettre les premières données de service à l'autre appareil électronique (E2).

2. Appareil électronique (E1) selon la revendication 1, dans lequel les au moins deux circuits de communication prennent en charge différents protocoles de communication sans fil.

3. Appareil électronique (E1) selon la revendication 1 ou 2, dans lequel l'appareil électronique (E1) comprend : au moins une puce de communication ;
chacun des au moins deux circuits de communication est un circuit situé dans l'au moins une puce de communication ; et
chacune de l'au moins une puce de communication comprend au moins l'un des au moins deux circuits de communication.

4. Appareil électronique (E1) selon l'une quelconque des revendications 1 à 3, dans lequel les protocoles de communication sans fil pris en charge par les au moins deux circuits de communication comprennent au moins deux des éléments suivants :
un protocole Bluetooth, un protocole Wi-Fi, un protocole à bande ultra large, UWB, un protocole de système mondial de navigation par satellite, GNSS, un protocole ZigBee, un protocole de communication en champ proche, NFC, un protocole Thread de technologie de protocole de communication pour l'Internet des objets domestique ou un protocole infrarouge.

5. Appareil électronique (E1) selon l'une quelconque des revendications 1 à 4, dans lequel chacun des au moins deux circuits de communication comprend : une unité de contrôle d'accès au média, MAC, correspondant à un protocole de communication sans fil pris en charge par chaque circuit de communication ou une unité de traitement de couche MAC correspondant à un protocole de communication sans fil pris en charge par chaque circuit de communication.

6. Appareil électronique (E1) selon l'une quelconque des revendications 1 à 5, dans lequel
le circuit de commande est en outre configuré pour : obtenir des secondes données de service, et lorsque les premières données de service et les secondes données de service répondent à une condition de transmission de combinaison, déterminer qu'un second circuit de communication est un circuit de communication configuré pour transmettre les premières données de service et les secondes données de service ; et est configuré pour indiquer au second circuit de communication de transmettre les premières données de service et les secondes données de service.

7. Appareil (E1) selon la revendication 6, dans lequel le premier circuit de communication est configuré pour : après que le circuit de commande indique au premier circuit de communication de transmettre les premières données de service, établir, sur la base d'un premier protocole de communication pris en charge par le premier circuit de communication, une première connexion de communication utilisée pour transmettre les premières données de service ; et est configuré pour libérer la première liaison de communication lorsque le circuit de commande indique au second circuit de communication de transmettre les premières données de service et les secondes données de service.

8. Procédé de commande de transmission, appliqué à un circuit de commande dans un premier appareil électronique (E1), dans lequel le procédé comprend :
l'obtention de premières données de service ; et
la distribution sélective des premières données de service à l'au moins un des au moins deux circuits de communication du premier appareil électronique (E1),
dans lequel l'un quelconque des au moins deux circuits de communication prend en charge au moins un protocole de communication sans fil,
dans lequel le premier appareil électronique (E1) comprend en outre un processeur d'application configuré pour générer les premières données de service ; le circuit de commande est un bus ; et le processeur d'application et les au moins deux circuits de communication sont reliés séparément au bus,
dans lequel le procédé comprend
l'examination des au moins deux circuits de communication et la détermination selon laquelle un premier circuit de communication est un circuit de communication configuré pour transmettre les premières données de service à un second appareil électronique (E2) ; et
l'indication du premier circuit de communication de transmettre les premières données de service au second appareil électronique (E2).

9. Produit de programme informatique comprenant des instructions qui, lorsque le programme est exécuté par un ordinateur, provoque la mise en œuvre par l'ordinateur du procédé selon la revendication 8.

10. Support de stockage lisible par ordinateur comprenant des instructions qui, lorsqu'elles sont exécutées par un ordinateur, provoquent la mise en œuvre par l'ordinateur du procédé selon la revendication 8.
